# EUROPÄISCHE PATENTSCHRIFT

(11) **EP 0 992 146 B1**
(45) Veröffentlichungstag und Bekanntmachung des Hinweises auf die Patenterteilung: **31.03.2010**
(21) Anmeldenummer: 98940051.0
(22) Anmeldetag: 19.06.1998
(51) Int. Cl.: H04L 29/06

(54) **VERFAHREN UND COMPUTERSYSTEM ZUR CODIERUNG EINER DIGITALEN NACHRICHT, ZUR ÜBERTRAGUNG DER NACHRICHT VON EINER ERSTEN COMPUTEREINHEIT ZU EINER ZWEITEN COMPUTEREINHEIT UND ZUR DECODIERUNG DER NACHRICHT**
METHOD AND COMPUTER SYSTEM FOR CODING A DIGITAL MESSAGE, FOR TRANSMITTING SAID MESSAGE FROM A FIRST COMPUTER UNIT TO A SECOND COMPUTER UNIT AND FOR DECODING THE MESSAGE
PROCEDE ET SYSTEME INFORMATIQUE POUR CODER UN MESSAGE NUMERIQUE, POUR TRANSMETTRE LEDIT MESSAGE D'UNE PREMIERE UNITE INFORMATIQUE A UNE DEUXIEME UNITE INFORMATIQUE ET POUR DECODER LEDIT MESSAGE

(30) Priorität: 26.06.1997 DE 19727267
(43) Veröffentlichungstag der Anmeldung: 12.04.2000
(73) Patentinhaber: SIEMENS AKTIENGESELLSCHAFT, 80333 München (DE)
(72) Erfinder: CAPELLARO, Christoph, D-82041 Oberhaching (DE); HOFFMANN, Gerhard, D-81547 München (DE); LUKAS, Klaus, D-81739 München (DE); MUNZERT, Michael, D-80639 München (DE)
(86) Internationale Anmeldenummer: PCT/DE1998/001693
(87) Internationale Veröffentlichungsnummer: WO 1999/000929

(56) Entgegenhaltungen:
- EP-A- 0 645 912
- DE-C- 19 548 387

## Beschreibung

### 1. Bezeichnung

Verfahren und Computersystem zur Codierung einer digitalen Nachricht, zur Übertragung der Nachricht von einer ersten Computereinheit zu einer zweiten Computereinheit und zur Decodierung der Nachricht

### 2. Technischer Hintergrund

Es sind verschiedene Netzwerkprotokolle im Bereich des Managements von Rechnernetzen bekannt. Die Aufgaben für die Verwaltung von Rechnernetzen wird durch die hohe Verbreitung von Computern und die immer komplexer werdende Vernetzung von Computern zunehmend schwieriger und die dafür erforderlichen Systeme zum Netzmanagement werden immer mächtiger. Im Rahmen der Verwaltung von Rechnernetzen gewinnt die Frage der Sicherheit des Netzmanagements immer größere Bedeutung. Die Sicherheit des Netzmanagements hängt sehr stark von den in dem System verwendeten Sicherheitstechniken ab.

Aus dem Dokument (M. Rose, The Simple Book, PTR Prentice Hall, 2. Auflage, ISBN 0-13-177254-6, S. 59 - 91, 1994) sind verschiedene Netzwerkprotokolle für das Netzmanagement bekannt, beispielsweise das Simple-Network-Management-Protocol (SNMP) in der Version 1 (SNMPv1) und in der Version 2 (SNMPv2) oder auch das Common-Management-Internet-Protocol (CMIP).

Das SNMPv1 hat bisher die weiteste Verbreitung zur Überwachung und Kontrolle von Netzwerkkomponenten sowohl über lokale Rechnernetze (Local Area Networks, LANs), als auch bei globalen Netzen (Wide-Area-Networks, WANs).

Das SNMPv1 ist im Rahmen des OSI-Kommunikationsschichten-Systems oberhalb der Internetprotokolle User-Datagram-Protocol (UDP) und Internet-Protocol (IP) angeordnet. Sowohl das UDP als auch das IP weisen erhebliche Schwächen im Bereich der Sicherheit auf, da Sicherheitsmechanismen in diesen Protokollen wenig bis gar nicht integriert sind.

Im weiteren werden sowohl das SNMP als auch CMIP als Netzwerkprotokoll bezeichnet.

Die Netzwerkprotokolle werden zur Übertragung von Rechnernetz-Management-Information zwischen einer ersten Computereinheit, die einen sog. Manager enthält und mindestens einer zweiten Computereinheit, die einen sog. Agenten enthält, verwendet. In einem komplexen Rechnernetz werden üblicherweise mindestens eine Managementstation und eine beliebige Anzahl von von der Managerapplikation überwachten und kontrollierten Rechnern über das Netzwerkprotokoll überwacht bzw. gesteuert.

Es sind jedoch ebenso Netzwerkmanagementarchitekturen bekannt, die mehrere Hierarchien aufweisen, beispielsweise mehrere Computer die von jeweils einem Manager überwacht werden, und mehrere Computer, die jeweils eine Managerapplikation enthalten, die wiederum von einem weiteren Computer, der eine übergeordnete Managerapplikation enthält, überwacht bzw. kontrolliert werden.

Ein Computer, der eine Managerapplikation des jeweiligen Netzwerkprotokolls enthält, wird im weiteren als erste Computereinheit bezeichnet.

Jede Computereinheit, die einen Agenten implementiert hat, wird im weiteren als zweite Computereinheit bezeichnet.

Es ist möglich, daß ein Computer sowohl als Manager als auch als Agent ausgestaltet ist, entsprechend sind die Funktionalitäten in dem Computer enthalten.

Das jeweilige Netzwerkprotokoll kann in dem Computer sowohl in Hardware als auch in Software realisiert sein.

Im weiteren wird von einer einfachen Hierarchie ausgegangen, d.h. es wird nur der Fall beschrieben, bei dem ein erster Computer als Manager eine beliebige Anzahl von zweiten Computern, die Agenten, überwacht, bzw. steuert. Dies dient jedoch lediglich der einfacheren Darstellung. Es ist ohne weiteres möglich, die Erfindung auch in einer Architektur mit einer beliebigen Anzahl von Hierarchieebenen anzuwenden.

Bei den Netzwerkprotokollen wird von der ersten Computereinheit zu den zweiten Computereinheiten entweder eine Informationsabfrage übertragen oder es wird ein Steuerungswert zur Steuerung bzw. Kontrolle der zweiten Computereinheit übertragen.

In jeder zweiten Computereinheit ist es bei den bekannten Netzwerkprotokollen üblich, daß die von der zweiten Computereinheit im Rahmen des Netzwerkprotokolls verwendete Information in Form einer sog. Management-Information-Base (MIB), die die Struktur einer hierarchischen Datenbank aufweist, speichert.

Die Gesamtstruktur der Managementinformation der Netzwerkprotokolle wird in einem sog. globalen Registratur-Baum (Registraion-Tree), beispielsweise dem globalen SNMP-Registration-Tree gespeichert. Die MIB eines Agenten, also einer zweiten Computereinheit, ist ein Teil des Registratur-Baums des jeweiligen Netzwerkprotokolls.

Zur Übertragung von Information zwischen der ersten Computereinheit und der zweiten Computereinheit werden digitale Nachrichten, beispielsweise eine SNMPv1-Nachricht verwendet.

Eine SNMPv1-Nachricht enthält eine Versionsnummer, einen sog. Community-String und eine SNMPv1-Protocol-Data-Unit (PDU).

Mit der Versionsnummer wird die Version des verwendeten Netzwerkprotokolls angegeben. Die Versionsnummer wird bei der Implementierung des jeweiligen Netzwerkprotokolls festgelegt.

Der Community-String bei der SNMPv1 dient als Passwort für den Zugang zu einer MIB einer zweiten Computereinheit. Der Community-String wird bei SNMPv1 unverschlüsselt zu dem Agenten gesendet. In dem Agenten, also der zweiten Computereinheit, wird überprüft, ob der Community-String, der jeweils zusammen mit einer SNMPv1-Nachricht empfangen wurde, zu einem Zugriff in der MIB der zweiten Computereinheit berechtigt. Da das Passwort bei SNMPv1 unverschlüsselt übertragen wird, ist ein Mißbrauch des Community-Strings leicht möglich, beispielsweise zur Maskierung eines potentiellen Angreifers und zum ungefugten Zugriff auf eine zweite Computereinheit, da es sehr einfach ist für einen potentiellen Angreifer, den Community-String zusammen mit einer IP-Senderadresse eines autorisierten Benutzers abzuhören.

SNMPv1 hat somit praktisch keinerlei wirkungsvolle Sicherheitsmechanismen integriert, insbesondere keine wirkungsvolle Authentifikation des SNMPv1-Managers und als Folge der fehlenden Authentifikation keine zuverlässige Zugriffskontrolle auf Seite des Agenten. Ferner enthält SNMPv1 keine Möglichkeit, Sicherheitsmechanismen der Datenintegrität oder der Datenvertraulichkeit zum implementieren. Somit ist es für einen potentiellen Angreifer ohne weiteres möglich, übertragene SNMP-PDUs einfach abzuhören und die übertragene Information zwischen Manager und Agent zu mißbrauchen.

Die Codierungsregeln der Netzwerkprotokolle sind detailliert in (M. Rose, The Simple Book, PTR Prentice Hall, 2. Auflage, ISBN 0-13-177254-6, S. 59 - 91, 1994) beschrieben.

Bei der zweiten Version des SNMP, dem SNMPv2 waren zwar verschiedene Sicherheitsmechanismen vorgesehen, jedoch war insbesondere die Verwaltung kryptographischer Schlüssel derart aufwendig, daß diese Problematik dazu führte, daß das SNMPv2 trotz erheblicher größerer Möglichkeiten zur Verwaltung von Rechnernetzen verglichen mit SNMPv1, sich gegenüber dem SNMPv1 nicht auf dem Markt durchsetzen konnte. Daher wurde der ursprüngliche SNMPv2 Standard zurückgezogen und durch einen modifizierten Standard, bei dem keine Sicherheit integriert wurde, ersetzt.

Auch CMIP, das aufgrund allgemein wesentlich größerer Komplexität verglichen mit SNMPv1 und SNMPv2 kaum Berücksichtigung in Produkten gefunden hat, konnte sich auf dem Markt nicht durchsetzen.

Ferner ist das Konzept von sog. Proxy-Agenten ebenfalls in dem Dokument (M. Rose, The Simple Book, PTR Prentice Hall, 2. Auflage, ISBN 0-13-177254-6, S. 315, 1994) beschrieben.

Die DE 195 48 387 C1 offenbart ein Verfahren zur kryptographischen Sicherung einer rechnergestützten digitalen Kommunikation zwischen einem Programm und einer Benutzereinheit. Bei diesem Verfahren wird von einem Programm eine Nachricht gebildet und die Nachricht für ein Transportprotokoll codiert. Direkt nach der Codierung wird unter Verwendung des Transportprotokolls die codierte Nachricht wieder decodiert und die decodierte Nachricht einem kryptographischen Verfahren unterzogen. Danach wird die kryptographisch bearbeitete Nachricht wiederum mit dem Transportprotokoll codiert und an eine Benutzereinheit übertragen.

### 3. Kurzbeschreibung der Erfindung

Somit liegt der Erfindung das Problem zugrunde, Verfahren sowie eine Computersysteme zur Codierung, Übertragung und Decodierung einer digitalen Nachricht anzugeben, bei der kryptographische Sicherheitsmechanismen vorgesehen sind, die einfacher sind als bei den bekannten Verfahren und Anordnungen.

Bei dem Verfahren gemäß Patentanspruch 1 wird eine digitale Nachricht, die von der ersten Computereinheit zu der zweiten Computereinheit übertragen werden soll, unter Verwendung eines Codierungsformats eines Netzwerkprotokolls zu einer codierten Nachricht codiert. Die codierte Nachricht wird mindestens einem kryptographischen Verfahren unterzogen und die kryptographisch bearbeitete codierte Nachricht wird wiederum unter Verwendung des Codierungsformats des Netzwerkprotokolls codiert.

Bei dem Verfahren gemäß Patentanspruch 2 wird die Nachricht entsprechend dem Codierungsformat des Netzwerkprotokolls decodiert. Ferner wird die decodierte kryptographisch bearbeitete Nachricht einem zu dem mindestens einen kryptographischen Verfahren inversen kryptographischen Verfahren unterzogen und die invers kryptographisch bearbeitete Nachricht entsprechend dem Codierungsformat des Netzwerkprotokolls decodiert.

Bei dem Verfahren gemäß Patentanspruch 3 wird eine digitale Nachricht, die von der ersten Computereinheit zu der zweiten Computereinheit übertragen werden soll, unter Verwendung eines Codierungsformats eines Netzwerkprotokolls zu einer codierten Nachricht codiert. Die codierte Nachricht wird mindestens einem kryptographischen Verfahren unterzogen und die kryptographisch bearbeitete codierte Nachricht wird wiederum unter Verwendung des Codierungsformats des Netzwerkprotokolls codiert. Nach erfolgter Codierung wird die gesamte Nachricht von der ersten Computereinheit mindestens zur zweiten Computereinheit übertragen. Die empfangene Nachricht wird in der zweiten Computereinheit entsprechend dem Codierungsformat des Netzwerkprotokolls decodiert. Anschließend wird die decodierte Nachricht dem zu dem verwendeten kryptographischen Verfahren inversen kryptographischen Verfahren unterzogen. In einem letzten Schritt wird die invers kryptographisch bearbeitete Nachricht entsprechend dem Codierungsformat des Netzwerkprotokolls decodiert.

Durch die "doppelte" Codierung bzw. Decodierung mit dem jeweiligen Netzwerkprotokoll wird eine sehr einfache, standardkonforme Lösung vorgeschlagen, die Übertragung von Nachrichten eines Netzwerkprotokolls kryptographisch abzusichern.

Das Verfahren weist ferner den erheblichen Vorteil der einfachen Realisierbarkeit und somit der schnellen Durchführbarkeit mit Hilfe eines Rechners auf.

Ein weiterer Vorteil ist darin zu sehen, daß die Netzwerkprotokolle unverändert bleiben können und keine neuen Netzwerkprotokolle definiert werden müssen. Somit ist keine aufwendige Versionsumstellung oder gar Neudefinition von Netzwerkprotokollen erforderlich. Die kryptographische Sicherheit des jeweiligen Netzwerkprotokolls kann ohne größeren Aufwand erheblich erhöht werden.

Das Computersystem gemäß Patentanspruch 12 enthält mindestens eine Recheneinheit, die derart eingerichtet ist, daß das Verfahren nach einem der Ansprüche 1 bis 11 durchgeführt wird.

Das Computersystem gemäß Patentanspruch 13 zur Codierung einer digitalen Nachricht unter Verwendung eines Codierungsformats eines Netzwerkprotokolls, umfaßt mindestens folgende Komponenten:
- ein erstes Mittel zur Codierung der digitalen Nachricht unter Verwendung des Codierungsformats des Netzwerkprotokolls zu einer codierten Nachricht,
- ein zweites Mittel zur kryptographischen Bearbeitung der codierten Nachricht,
- ein drittes Mittel zur Codierung der kryptographisch bearbeiteten Nachricht unter Verwendung des Codierungsformats des Netzwerkprotokolls.

Das Computersystem gemäß Patentanspruch 14 zur Decodierung einer digitalen Nachricht, welches in einem Codierungsformat eines Netzwerkprotokolls vorliegt, umfaßt mindestens folgende Komponenten:
-- ein fünftes Mittel zum Empfangen der codierten kryptographisch bearbeiteten Nachricht von der ersten Computereinheit,
-- ein sechstes Mittel zur Decodierung der empfangenen Nachricht entsprechend dem Codierungsformat des Netzwerkprotokolls,
-- ein siebtes Mittel zur inversen kryptographischen Bearbeitung der decodierten kryptographisch bearbeiteten Nachricht, und
-- ein achtes Mittel zur Decodierung der invers kryptographisch bearbeiteten Nachricht entsprechend dem Codierungsformat des Netzwerkprotokolls.

Das Computersystem gemäß Patentanspruch 15 zur Codierung einer digitalen Nachricht, zur Übertragung der Nachricht von einer ersten Computereinheit zu einer zweiten Computereinheit und zur Decodierung der Nachricht enhält mindestens folgende Komponenten,
- eine erste Computereinheit, die mindestens folgende Komponenten umfaßt:
   -- ein erstes Mittel zur Codierung der digitalen Nachricht unter Verwendung eines Codierungsformats eines Netzwerkprotokolls zu einer codierten Nachricht,
   -- ein zweites Mittel zur kryptographischen Bearbeitung der codierten Nachricht,
   -- ein drittes Mittel zur Codierung der kryptographisch bearbeiteten Nachricht unter Verwendung des Codierungsformats des Netzwerkprotokolls,
   -- ein viertes Mittel zum Senden der codierten kryptographisch bearbeiteten Nachricht von der ersten Computereinheit zu der zweiten Computereinheit,
- eine zweite Computereinheit, die mindestens folgende Komponenten umfaßt:
   -- ein fünftes Mittel zum Empfangen der codierten kryptographisch bearbeiteten Nachricht von der ersten Computereinheit,
   -- ein sechstes Mittel zur Decodierung der empfangenen Nachricht entsprechend dem Codierungsformat des Netzwerkprotokolls,
   -- ein siebtes Mittel zur inversen kryptographischen Bearbeitung der decodierten kryptographisch bearbeiteten Nachricht, und
   -- ein achtes Mittel zur Decodierung der invers kryptographisch bearbeiteten Nachricht entsprechend dem Codierungsformat des Netzwerkprotokolls.

Somit weisen die Computersysteme die oben im Zusammenhang mit dem Verfahren beschriebenen Vorteile ebenfalls auf.

Vorteilhafte Weiterbildungen der Erfindung ergeben sich aus den abhängigen Ansprüchen.

Besonders vorteilhaft ist das Verfahren im Zusammenhang mit SNMPv1 als Netzwerkprotokoll anwendbar, da für SNMPv1 bisher praktisch keine kryptographische Sicherheit vorhanden ist.

Doch auch bei den anderen Netzwerkprotokollen kann dieses Verfahren und die entsprechende Anordnung zur Durchführung des Verfahrens verwendet werden, da auch dort die Gesamtkomplexität des jeweiligen Netzwerkprotokolls erheblich reduziert wird.

Ferner ist es bei dem Computersystem vorteilhaft, ein zweites Mittel zur kryptographischen Bearbeitung der codierten Nachricht, ein drittes Mittel zur Codierung der kryptographisch bearbeiteten Nachricht unter Verwendung des Codierungsformats des Netzwerkprotokolls sowie ein viertes Mittel zum Senden der codierten kryptographisch bearbeiteten Nachricht zu der zweiten Computereinheit als einen sog. Proxy-Agenten auszugestalten, der über eine als gesichert angenommene Kommunikationsverbindung zu dem ersten Mittel zur Codierung der digitalen Nachricht unter Verwendung des Netzwerkprotokolls verbunden ist. Der erste Proxy-Agent und die erste Computereinheit können gemeinsam in einer Computereinheit oder auch in zwei unterschiedlichen Computereinheiten realisiert sein.

Auf diese Weise wird unter Verwendung der Proxy-Technik, die aus dem Dokument (M. Rose, The Simple Book, PTR Prentice Hall, 2. Auflage, ISBN 0-13-177254-6, S. 315, 1994) bekannt ist, die Realisierung eines Computersystems zur kryptographisch sicheren Übertragung von Nachrichten des Codierungsformats eines Netzwerkprotokolls erreicht.

Dieser Vorteil ist ebenso dann gegeben, wenn ein fünftes Mittel zum Empfang der codierten kryptographisch bearbeiteten Nachricht, ein sechstes Mittel zur Decodierung der empfangenen Nachricht entsprechend dem Codierungsformat des Netzwerkprotokolls sowie ein siebtes Mittel zur inversen kryptographischen Bearbeitung der decodierten kryptographisch bearbeiteten Nachricht zusammen in einem zweiten Proxy-Agenten realisiert sind, der über eine als gesichert angenommene Kommunikationsverbindung mit dem Agenten der zweiten Computereinheit unter Verwendung des Netzwerkprotokolls verbunden ist.

### 4. Kurzbeschreibung der Figuren

In den Fig. ist ein Ausführungsbeispiel der Erfindung dargestellt, die im weiteren näher erläutert wird.

Es zeigen
- Fig. 1: ein Ablaufdiagramm, in dem das erfindungsgemäße Verfahren mit Realisierungsdetails für einen Get-Request dargestellt ist;
- Fig. 2: ein Ablaufdiagramm, in dem das Verfahren in seinen Verfahrensschritten mit Realisierungsdetails für einen Set-Request dargestellt ist;
- Fig. 3: ein Ablaufdiagramm, in dem das Verfahren in abstrakter Form dargestellt ist;
- Fig. 4: eine Skizze eines möglichen Aufbaus einer kryptographisch bearbeiteten SNMPv1-Nachricht, in der der Sicherheitsmechanismus der Authentifikation der Originaldaten realisiert wird;
- Fig. 5: der Aufbau einer möglichen kryptographisch bearbeiteten SNMPv1-Nachricht, mit der die Sicherheitsdienste Integrität und Vertraulichkeit der übertragenen SNMPv1-Nachricht realisiert wird;
- Fig. 6: der mögliche Aufbau einer kryptographisch bearbeiteten SNMPv1-Nachricht, in der der Sicherheitsdienst der Vertraulichkeit der SNMPv1-Nachricht realisiert wird;

### 5. Figurenbeschreibung

### Get-Request

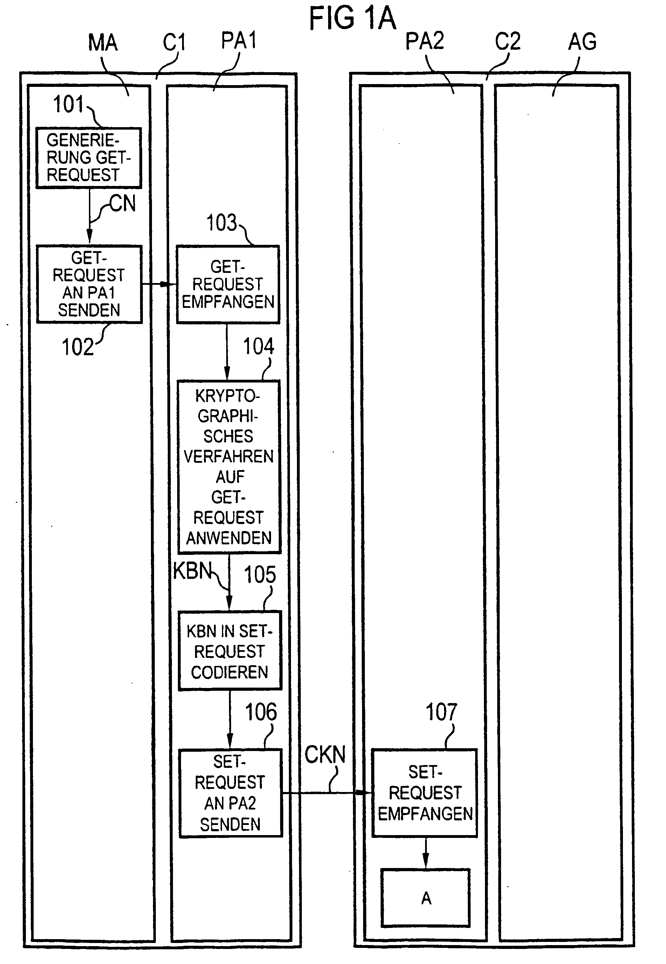

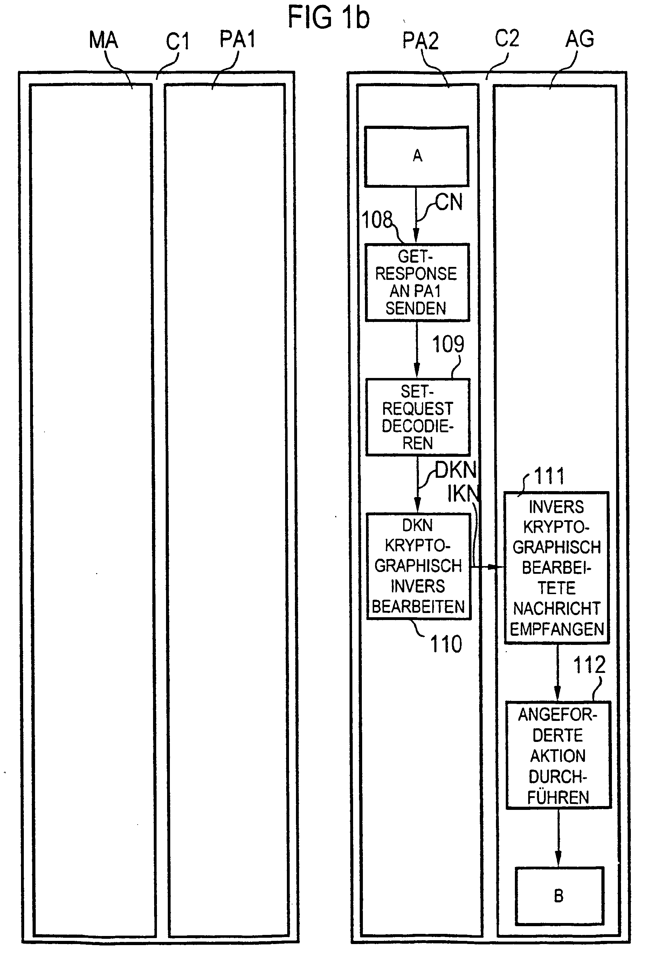

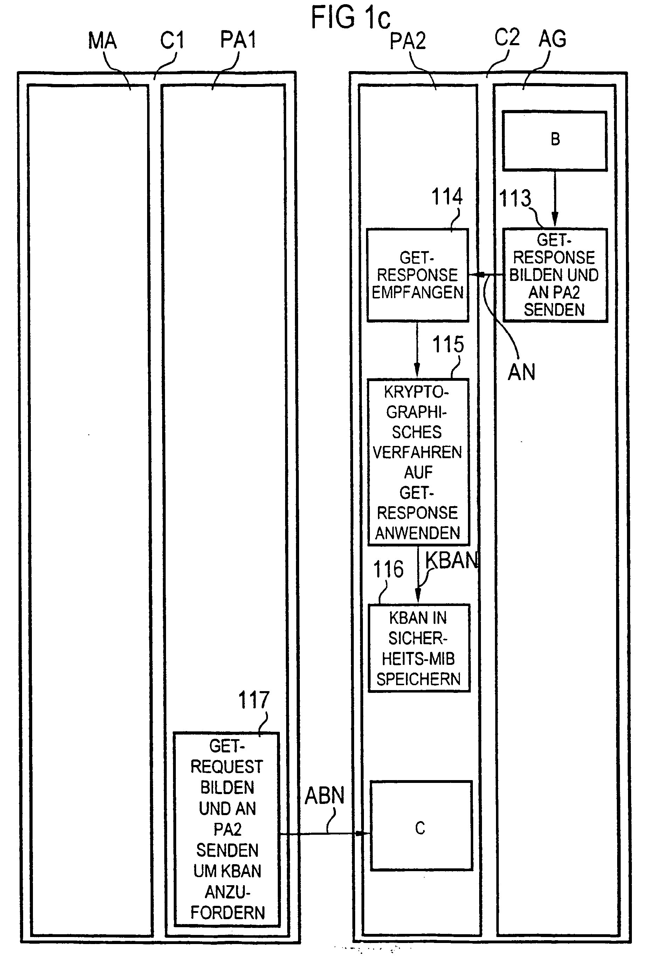

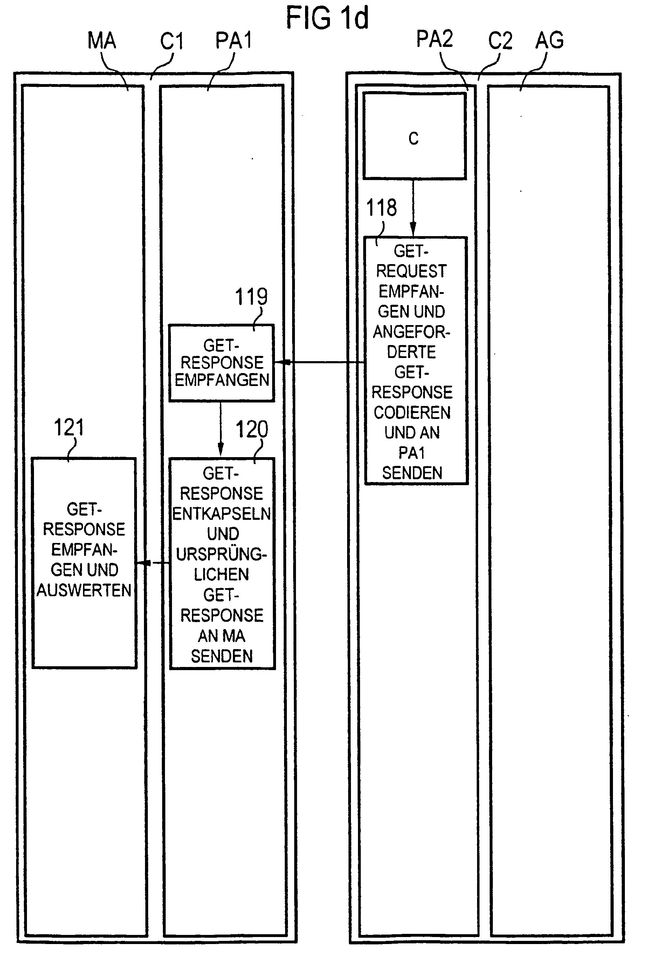

In Fig. 1 sind eine erste Computereinheit C1 und eine zweite Computereinheit C2 symbolhaft dargestellt. Die erste Computereinheit C1 weist eine Managerapplikation MA des SNMPv1 sowie einen ersten Proxy-Agenten PA1 auf.

Die zweite Computereinheit C2 weist einen SNMPv1-Agenten AG sowie einen zweiten Proxy-Agenten PA2 auf Seiten der zweiten Computereinheit C2 auf.

In einem ersten Schritt 101 wird in der ersten Computereinheit C1 ein Get-Request gebildet. Unter der Bildung eines Get-Requests ist zu verstehen, daß eine digitale Nachricht unter Verwendung eines Codierungsformats des SNMPv1-Netzwerkprotokolls zu einer codierten Nachricht, dem Get-Request, codiert wird. Dies erfolgt in einem ersten Mittel 101 der ersten Computereinheit C1 zur Codierung der digitalen Nachricht unter Verwendung des Codierungsformats des Netzwerkprotokolls.

In einem zweiten Schritt 102 wird der Get-Request, d.h. die codierte Nachricht CN von dem ersten Mittel M1 zu dem ersten Proxy-Agenten PA1 auf der Seite der ersten Computereinheit C1 gesendet.

In dem ersten Proxy-Agenten PA1 wird in einem dritten Schritt 103 die codierte Nachricht CN empfangen.

In einem vierten Schritt 104 wird die codierte Nachricht CN in dem ersten Proxy-Agenten PA1 mindestens einem kryptographischen Verfahren unterzogen. Zur kryptographischen Bearbeitung der codierten Nachricht in dem vierten Schritt 104 wird ein zweites Mittel 104 eingesetzt.

Unter einem kryptographischen Verfahren ist jedes beliebige kryptographische Verfahren z.B. zur Authentifikation, zur Sicherung der Datenintegrität oder auch zur Verschlüsselung von digitalen Daten zu verstehen. Hierbei können beispielsweise das RSA-Verfahren oder auch der Data-Encryption-Standard, der als DES-Verfahren bezeichnet wird, Verwendung finden.

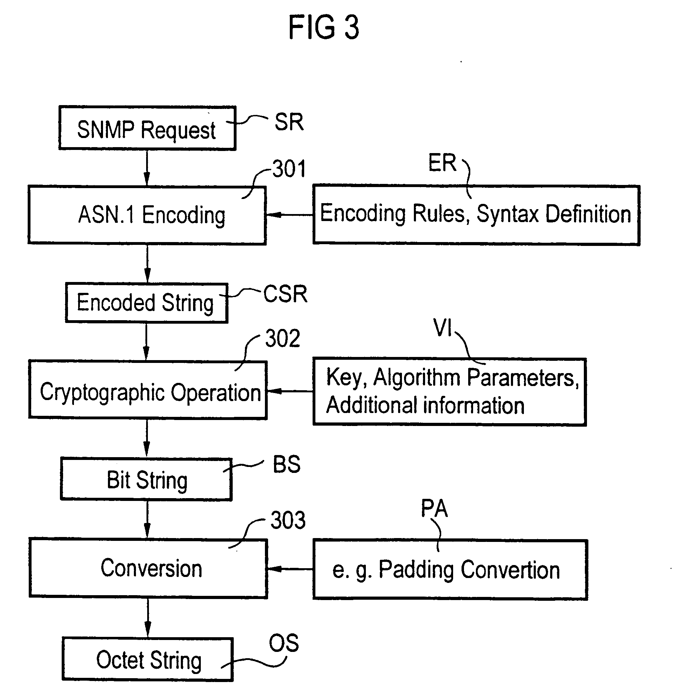

Als Ergebnis erhält man eine kryptographisch bearbeitete Nachricht KBN, deren Format beispielsweise in den Fig. 3 bis 6 dargestellt ist und im weiteren näher erläutert wird.

In einem fünften Schritt 105 wird die kryptographisch bearbeitete Nachricht KBN wiederum unter Verwendung des Codierungsformats des SNMP-Netzwerkprotokolls codiert. Unter diesem Verfahrensschritt ist zu verstehen, daß der kryptographisch bearbeitete Get-Request vorzugsweise in einem Set-Request codiert wird, d.h. eingekapselt wird. Ferner ist ein drittes Mittel 105 zur Codierung der kryptographisch bearbeiteten Nachricht unter Verwendung des Codierungsformats des Netzwerkprotokolls vorgesehen.

Wie im weiteren deutlich wird, ist es vorteilhaft, jede Art von Nachricht, die von der ersten Computereinheit C1 zu der zweiten Computereinheit C2 übertragen werden soll, in dem fünften Schritt 105 als Set-Request zu codieren. Dies ist vorteilhaft, da die Syntax von SNMPv1 für einen Get-Request lediglich Object-Indentifiers als zu übertragende Nutzdaten erlaubt. Es ist bei SNMPv1 nicht möglich, die kryptographisch bearbeitete Information in einem SNMP-Get-Request einzubinden.

In einem sechsten Schritt 106 wird der Set-Request als codierte kryptographisch bearbeitete Nachricht CKN von der ersten Computereinheit C1 zu der zweiten Computereinheit C2, d.h. von dem ersten Proxy-Agenten PA1 zu einem zweiten Proxy-Agenten PA2 übertragen.

Von dem zweiten Proxy-Agenten PA2 der zweiten Computereinheit C2 wird die codierte kryptographisch bearbeitete Nachricht CKN in einem siebten Schritt 107 empfangen. Hierzu ist ein fünftes Mittel 107 zum Empfangen der codierten kryptographisch bearbeiteten Nachricht CKN vorgesehen.

In einem achten Schritt 108 wird von dem zweiten Proxy-Agenten PA2 standardkonform eine Get-Response als Antwort auf den Set-Request an den ersten Proxy-Agenten PA1 der ersten Computereinheit C1 gesendet. Der Get-Response enthält als Bestätigung den jeweiligen Fehlerzustand.

In einem neunten Schritt 109 wird die empfangene codierte kryptographisch bearbeitete Nachricht CKN unter Verwendung des Codierungsformats des Netzwerkprotokolls entkapselt, d.h. decodiert. Es ist ein sechstes Mittel 109 zur Decodierung der empfangenen Nachricht entsprechend dem Codierungsformat des SNMPv1-Protokolls vorgesehen.

In einem zehnten Schritt 110 wird von dem zweiten Proxy-Agenten PA2 das zu dem jeweils vorgesehenen kryptographischen Verfahren inverse kryptographische Verfahren beispielsweise zur Authentifikation, zur Entschlüsselung bzw. zur Sicherung der Integrität der übertragenen Daten auf die decodierte kryptographisch bearbeitete Nachricht DKN angewendet. Hierzu ist ein siebtes Mittel 110 zur inversen kryptographischen Bearbeitung der decodierten kryptographisch bearbeiteten Nachricht DKN vorgesehen.

Weiterhin wird die invers kryptographisch bearbeitete Nachricht IKN, d.h. der originale Get-Request, von dem zweiten Proxy-Agenten PA2 zu der Agentenapplikation AG der zweiten Computereinheit C2 gesendet.

In einem elften Schritt 111 wird der Get-Request von dem Agenten AG empfangen. Hierzu ist ein achtes Mittel 111 Empfangen des Get-Requests vorgesehen.

In einem weiteren Schritt 112 wird die invers kryptographisch bearbeitete Nachricht entsprechend dem Codierungsformat des SNMPv1-Protokolls zu der digitalen Nachricht decodiert, d.h. ausgewertet. Dies bedeutet, daß für den Spezialfall des Get-Requests die über den Get-Request angeforderte Information eines Werts eines sog. Managed Objects (MO), der in der MIB des Agenten AG gespeichert ist, ausgelesen wird. Die Angabe, welche Information tatsächlich angefordert wird, ist als Object-Identifier in dem ursprünglichen Get-Request enthalten.

Es wird also in dem zwölften Schritt 112 die angeforderte Aktion ausgeführt, in diesem Fall das Auslesen der angeforderten Information, einen Wert eines Managed Objects. Hierzu ist ein neuntes Mittel 112 zur Durchführung der angeforderten Aktion vorgesehen.

Wie es in SNMPv1 vorgesehen ist, wird von dem Agenten AG in der zweiten Computereinheit als Antwort auf einen Get-Request ein Get-Response gebildet und in einem dreizehnten Schritt 113 zu dem zweiten Proxy-Agenten PA2 gesendet. Der Get-Response erhält das Ergebnis der Aktion, die von der ersten Computereinheit C1 in dem Get-Request angefordert wurde.

Der Get-Response wird im weiteren als Antwortnachricht AN bezeichnet. Die Antwortnachricht AN kann entweder direkt zu der ersten Computereinheit C1 übertragen werden oder, zur weiteren Erhöhung der kryptographischen Sicherheit, entsprechend dem Codierungsformat des Netzwerkprotokolls noch einmal codiert werden. Es ist in der zweiten Computereinheit C2 ein zehntes Mittel 112 zum Senden des Ergebnisses der Aktion zu der ersten Computereinheit C1 vorgesehen.

Weiterhin ist ein elftes Mittel 113 zur Bildung der Antwortnachricht AN vorgesehen, die das Ergebnis der Aktion enthält und zur Codierung der Antwortnachricht AN entsprechend dem Codierungsformat des SNMPv1-Protokolls.

In einem vierzehnten Verfahrensschritt 114 wird von dem zweiten Proxy-Agenten PA2 die Antwortnachricht AN empfangen. Hierzu ist ein zwölftes Mittel 114 zum Empfangen der Antwortnachricht AN vorgesehen.

In einem fünfzehnten Schritt 115 wird die codierte Antwortnachricht AN mindestens einem kryptographischen Verfahren unterzogen. Hierfür ist ein dreizehntes Mittel 115 zur Bearbeitung der Antwortnachricht AN mit mindestens einem kryptographischen Verfahren vorgesehen. Das Ergebnis dieses Verfahrensschritts ist eine in einem Sicherheitsrahmen eingekapselte Get-Response.

Die kryptographisch bearbeitete Antwortnachricht KBAN wird in einer Sicherheits-MIB in dem zweiten Proxy-Agenten PA2 gespeichert (Schritt 116). Der Aufbau der Sicherheits-MIB wird im weiteren detailiert beschrieben.

Um die kryptographisch bearbeitete Antwortnachricht KBAN zu erlangen, wird von dem ersten Proxy-Agenten PA1 der ersten Computereinheit C1 ein Get-Request, d.h. eine Abrufnachricht ABN gebildet. Hierfür ist ein vierzehntes Mittel 117 zur Bildung und Codierung der Abrufnachricht ABN entsprechend dem Codierungsformat des SNMPv1-Protokolls vorgesehen, mit der die kryptographisch bearbeitete Antwortnachricht KBAN von der zweiten Computereinheit C2 angefordert wird. Ferner wird die codierte Abrufnachricht ABN von der ersten Computereinheit C1 zu der zweiten Computereinheit C2 gesendet.

In einem achtzehnten Schritt 118 wird in dem zweiten Proxy-Agenten PA2 die Abrufnachricht ABN, d.h. in diesem Fall der Get-Request, empfangen und standardkonform der übliche Get-Response, der in diesem Fall die kryptographisch bearbeitete Antwortnachricht KBAN enthält, an den ersten Proxy-Agenten PA1 gesendet. Hierzu ist in der zweiten Computereinheit C2 ein fünfzehntes Mittel 118 zum Empfangen der Abrufnachricht ABN und zur Codierung der in der Abrufnachricht ABN angeforderten kryptographisch bearbeiteten Antwortnachricht KBAN entsprechend dem Codierungsformat des SNMPv1-Protokolls, d.h. zur Codierung des angeforderten Get-Response vorgesehen.

Die codierte kryptographisch bearbeitete Antwortnachricht wird von dem zweiten Proxy-Agenten PA2 zu dem ersten Proxy-Agenten PA1 übertragen.

In einem weiteren Schritt 119 wird in dem ersten Proxy-Agenten PA1 die codierte kryptographisch bearbeitete Antwortnachricht, enthalten in der standardkonformen Get-Response, empfangen. Hierfür ist ein sechzehntes Mittel 119 zum Empfangen der Get-Response in der ersten Computereinheit C1 vorgesehen.

In einem weiteren Schritt 120 wird der Get-Request decodiert, d.h. entkapselt und der ursprünglich von dem Agenten AG der zweiten Computereinheit C2 gebildete Get-Response zu der Managerapplikation MA der ersten Computereinheit C1 gesendet. Hierfür ist ein siebzehntes Mittel 120 vorgesehen zum Decodieren der Get-Response und zum Senden der ursprünglichen, in der Get-Response enthaltenen Get-Response, die die angeforderte Information enthält, zu der Managerapplikation MA.

In einem letzten Schritt 121 wird die Get-Response von der Managerapplikation MA empfangen und der angeforderte Wert ausgewertet und abgespeichert. Hierfür ist ein achtzehntes Mittel 121 zum Empfangen und Auswerten von Managementinformation in der Managerapplikation MA vorgesehen.

Auf diese Weise wird erreicht, daß ohne großen Mehraufwand und ohne das Verfahren des SNMPv1-Protokolls ändert zu müssen, eine kryptographische Sicherung der Kommunikation möglich wird.

### Get-Next-Request

Für einen Get-Next-Request, der ebenfalls im Rahmen des SNMPv1-Protokolls vorgsehen ist, wird das Verfahren auf die gleiche Weise, wie für den Get-Request beschrieben, durchgeführt, lediglich mit einem veränderten, entsprechend angepaßten Object-Identifier für den angeforderten Wert des jeweiligen Managed Objects.

### Set-Request

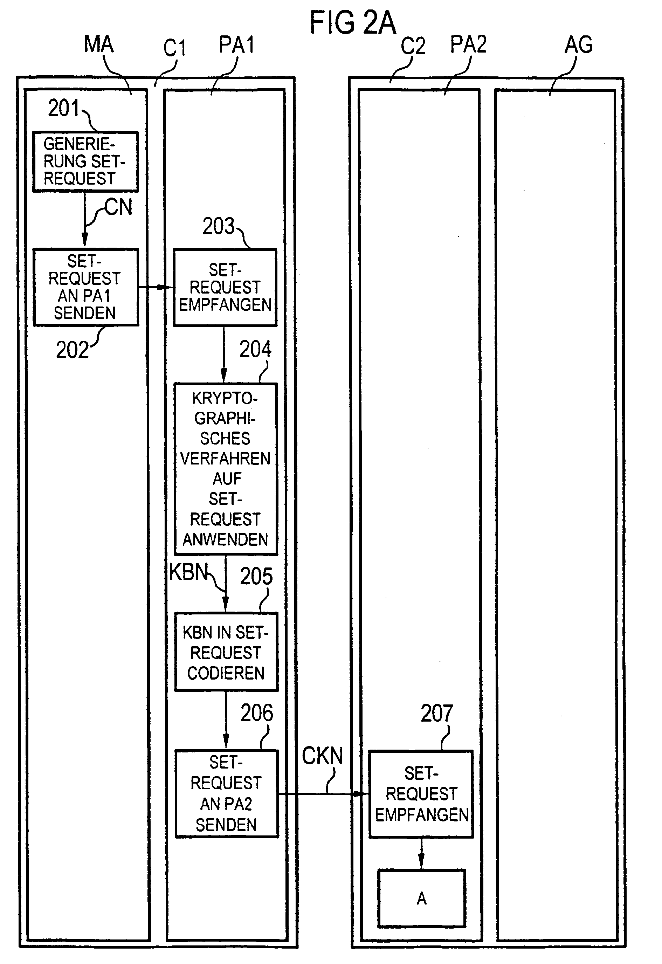

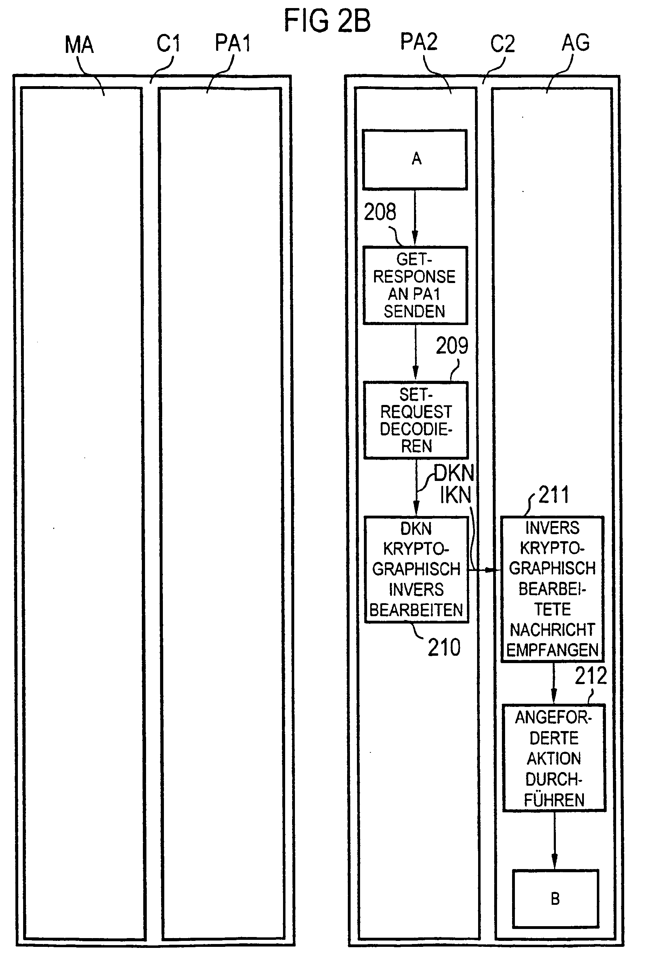

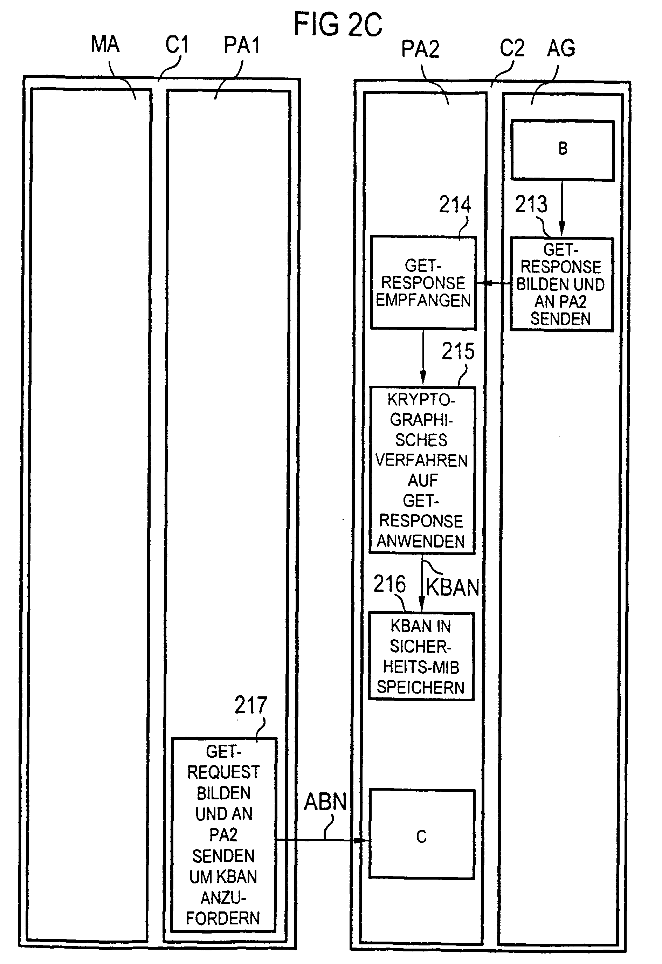

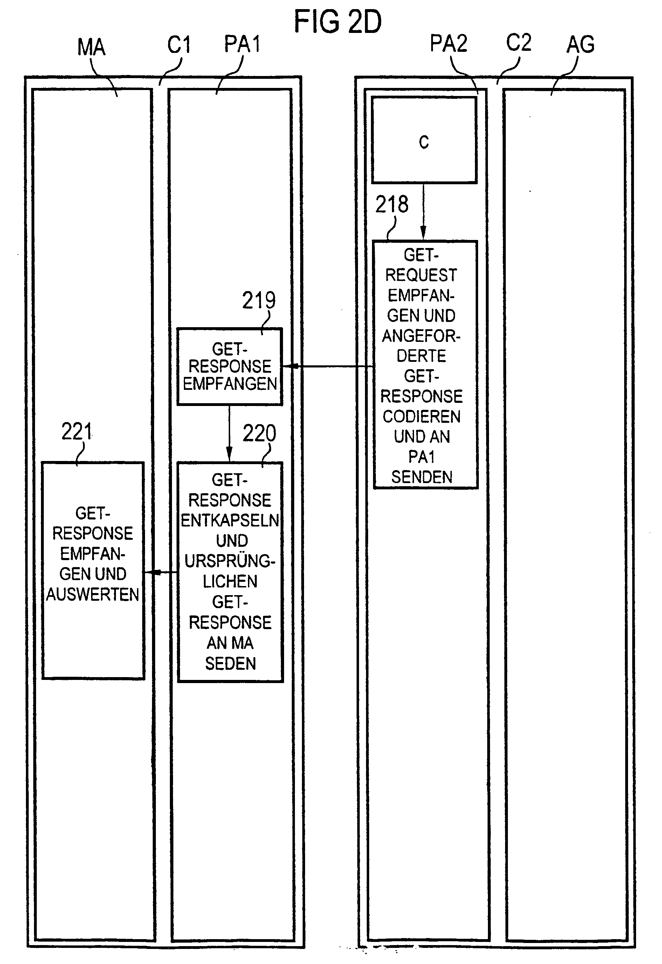

In Fig. 2 ist das Verfahren für einen Set-Request als codierte digitale Nachricht CN dargestellt. Zur einfacheren Erläuterung wird lediglich das Verfahren im weiteren beschrieben, die Mittel sind entsprechend ausgestaltet, daß die einzelnen Verfahrensschritte mit den Computereinheiten C1, C2 durchgeführt werden können.

In einem ersten Schritt 201 wird der Set-Request, d.h. die digitale Nachricht codiert.

In einem zweiten Schritt 202 wird von dem Manager MA der ersten Computereinheit der Set-Request, d.h. die codierte Nachricht CN zu dem ersten Proxy-Agenten PA1 gesendet.

In einem dritten Schritt 203 wird die codierte Nachricht CN von dem ersten Proxy-Agenten PA1 empfangen.

In einem vierten Schritt 204 wird ein kryptographisches Verfahren auf die codierte Nachricht CN angewendet. Das Ergebnis der kryptographischen Bearbeitung ist eine kryptographisch bearbeitete Nachricht KBN.

In einem fünften Schritt 205 wird die kryptographisch bearbeitete Nachricht KBN wiederum unter Verwendung des Codierungsformats des SNMPv1-Protokolls codiert zu einer codierten kryptographisch bearbeiteten Nachricht CKN. Hierfür wird wiederum ein Set-Request verwendet.

Der Set-Request wird von dem ersten Proxy-Agenten PA1 zu dem zweiten Proxy-Agenten PA2 gesendet (Schritt 206).

In einem siebten Schritt 207 wird von dem zweiten Proxy-Agenten PA2 der Set-Request empfangen.

Als Reaktion auf den Empfang des Set-Requests sendet standardkonform der zweite Proxy-Agent PA2 eine Get-Response, die als Bestätigung den Fehlerzustand enthält (Schritt 208).

In einem weiteren Schritt 209 wird die codierte kryptographisch bearbeitete Nachricht decodiert, d.h. "ausgepackt". Das Ergebnis ist die decodierte kryptographisch bearbeitete Nachricht DKN.

In einem zehnten Schritt 210 wird jeweils das zu dem verwendeten kryptographischen Verfahren inverse kryptographische Verfahren auf die kryptographisch bearbeitete Nachricht DKN angewendet. Ferner wird die invers kryptographisch bearbeitete Nachricht IKN, d.h. der ursprüngliche Set-Request von dem zweiten Proxy-Agenten PA2 zu dem Agenten AG der zweiten Computereinheit C2 gesendet.

In einem elften Schritt 211 wird von dem Agenten AG die decodierte kryptographisch bearbeitete Nachricht empfangen und in einem weiteren Schritt 212 die in dem Set-Request angegebene Aktion durchgeführt.

Als Reaktion sendet der Agent AG der zweiten Computereinheit C2 standardkonform die Antwortnachricht AN in Form eines Get-Response zu dem zweiten Proxy-Agenten PA2 (Schritt 213).

In einem vierzehnten Schritt 214 empfängt der zweite Proxy-Agent PA2 die Antwortnachricht AN.

In einem fünfzehnten Schritt 215 wird wiederum auf die Antwortnachricht AN mindestens ein vorgebbares kryptographisches Verfahren angewendet.

Die weiteren Verfahrensschritte 216, 217, 218, 219, 220 sowie 221 entsprechen den in Zusammenhang mit einem Get-Request beschriebenen Verfahren, den Verfahrensschritten 116, 117, 118, 119, 120 sowie 121.

Die Sicherheits-MIB enthält Einträge, die in ihrer Struktur die übliche Syntax zur Beschreibung von Mananged-Objects verwendet. Einträgen in der Sicherheits-MIB werden eindeutige Object-Identifiers zugeordnet, die zur eindeutigen Identifizierung der Einträge in der Sicherheits-MIB verwendet werden. Die Object-Identifiers werden in der globalen SNMP-MIB registriert. Damit wird erreicht, daß der Zweck und die Syntax des jeweiligen Managed-Objects bekannt ist. Die verschiedenen Einträge der Sicherheits-MIB können beispielsweise entweder digital unterzeichnete, integritätsgeschützte, oder verschlüsselte Managementinformation enthalten. Selbstverständlich können beliebige Kombinationen der oben beschriebenen Mechanismen in der Sicherheits-MIB eingetragen sein und somit im Rahmen des Verfahrens berücksichtigt werden.

Im weiteren wird eine mögliche Beispiel-Syntax in ASN.1 (Abstract Syntax Notation One) einer solchen Sicherheits-MIB dargestellt.

Die Syntax eines sicheren, eingekapselten Managed-Objects ist OCTET STRING. Der Aufbau eines solchen eingekapselten Managed-Objects ist wie folgt:

```
SecureMO ::=
    SEQUENCE {
        PlainHeader,
        EncapsulatedData
    }

PlainHeader ::=
    SEQUENCE {
        SecurityAssociationID,
        UsedAlgorithms,
        AlgorithmParameters
    }

EncapsulatedData ::= OCTET STRING
    -- signed, encrypted, or integrity protected
    -- ASN.1-encoded data

SecurityAssociationID ::= OBJECT IDENTIFIER

UsedAlgorithms ::= INTEGER (0..7)
    -- value 0 stands for "no security"
    -- value 1 stands for "signed"
    -- value 2 stands for "integrity protected"
    -- value 3 stands for "signed" and "integrity protected"
    -- value 4 stands for "encrypted"
    -- value 5 stands for "signed" and "encrypted"
    -- value 6 stands for "integrity protected" and
    -- "encrypted"
    -- value 7 stands for "signed", "integrity protected"
    -- and "encrypted"

AlgorithmParameters ::=
    -- necessary parameters for the particular
    -- algorithms in use
```

Der Wert des Parameters UsedAlgorithms wird nach dem folgenden Schema gebildet. Er kann als Bit-String der Länge 3 Bit repräsentiert werden, wobei das Bit niedrigster Wertigkeit die Verwendung digitaler Signatur ("signed") anzeigt, das Bit mit zweitniedrigster Wertigkeit beispielsweise anzeigt, ob Mechanismen zur Sicherung der Datenintegrität vorgesehen sind ("integrity protected"), und das Bit mit der höchsten Wertigkeit beschreibt, ob die Daten verschlüsselt wurden ("encrypted").

Somit kann das Ergebnis jeder kryptographischen Bearbeitung einer Nachricht als ein Bit-String mit der Länge 3 beschrieben werden. Die kryptographisch bearbeitete Nachricht wird als OCTET STRING codiert. Besteht sie aus einer nicht durch 8 teilbaren Anzahl von Bits, so kann sie jedoch durch Anwendung eines sog. Paddings, d.h. durch Auffüllen von Bits ohne semantische Bedeutung, zu einem OCTET STRING erweitert werden.

Diese Situation ist beispielhaft in einem Ablaufdiagramm in Fig. 3 dargestellt.

Ein SNMPv1-Request SR wird gemäß den Vorschriften zur Codierung des jeweiligen Netzprotokolls in ASN.1 (Codierungsregeln, Syntaxdefinition, ER) codiert 301. Der codierte SNMP-Request CSR, d.h. die codierte Nachricht CN wird in einem zweiten Schritt 302 dem jeweiligen kryptographischen Verfahren unterzogen. Hierbei werden beispielsweise kryptographische Schlüssel, Parameter zur Angabe des verwendeten Algorithmus, sowie zusätzliche Information, allgemein kryptographische Information VI, zur Durchführung des jeweiligen kryptographischen Verfahrens verwendet.

Der sich ergebende Bit-String BS wird beispielsweise durch Auffüllen von Füllbits in einem Schritt 303 zu einem OCTET STRING OS konvertiert, z.B. unter Verwendung von Padding PA.

Die abstrakte Vorgehensweise zur inversen kryptographischen Bearbeitung wird entsprechend umgekehrt durchgeführt.

Es ist vorteilhaft, existierende Funktionen zur Sicherung der Kommunikation im Rahmen von SNMPv1 dort anzuwenden, wo es möglich ist und diese Sicherheitsfunktionen mit weiteren kryptographischen Verfahren zu verstärken, wo es nötig ist.

So ist es vorteilhaft, das Konzept von Community-Strings in SNMPv1 auch im Rahmen dieses Verfahrens zu verwenden. Im Rahmen des Konzepts einer Community werden Gruppen definiert und den einzelnen Gruppen Zugriffsrechte für die jeweiligen Mitglieder der Gruppe zugeordnet. Eine Community und die der Community zugeordneten Zugriffsrechte sind Teil einer Konfiguration eines SNMPv1-Agenten. Es ist vorteilhaft, jeweils Communities mit spezifischen Sicherheitsmechanismen zu assoziieren. So ist es beispielsweise möglich, einer Community unterschiedliche kryptographische Algrorithmen, kryptographische Schlüssel und entsprechende Parameter, die im Rahmen des kryptographischen Verfahren jeweils verwendet werden, Mitgliedern der Community zuzuordnen.

Standardkonforme Object-Identifier werden vorzugsweise als Angaben verwendet, welche in kryptographischen Verfahren verwendet werden sollen.

Bei der Sicherheitskonfiguration wird vorzugsweise anstelle von kryptographischen Schlüsseln Object-Identifier auf gespeicherte kryptographische Schlüssel verwendet, die im weiteren als Schlüssel-Identifier bezeichnet werden. Durch diese Vorgehensweise wird das jeweilige Schlüsselmaterial besser gesichert.

Weiterhin kann das jeweilige Schlüsselmaterial dadurch stärker geschützt werden, daß beispielsweise die Dateien, in denen die kryptographischen Schlüssel gehalten werden, verschlüsselt werden oder spezielle Hardwareeinheiten zum Schutz der kryptographischen Schlüssel vorgesehen sind, beispielsweise Chipkarten.

Die jeweils zu verwendenden Realisierungsdetails ergeben sich aus der Sicherheitspolitik, die entsprechend der Anwendung stark variieren kann.

### Authentifikation des Datenursprungs

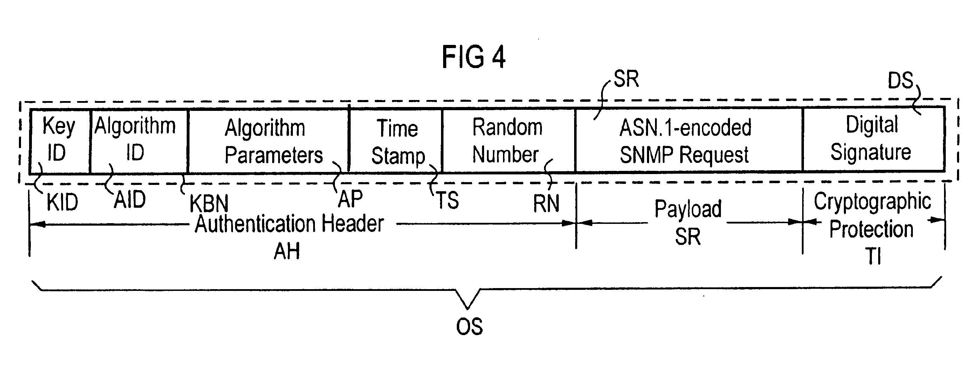

Um den Sicherheitsdienst der Authentifikation der Ursprungsdaten zu erreichen kann beispielsweise folgende Information in der kryptographisch bearbeiteten Nachricht vorgesehen sein (vgl. Fig. 4).

Der SNMPv1-Request, d.h. die codierte Nachricht CN, wird durch die kryptographische Bearbeitung mit folgenden Header- bzw. Trailer-Informationen umkapselt, wodurch die kryptographisch bearbeitete Nachricht KBN entsteht.

Ein Authentifikations-Header AH enthält einen Schlüssel-Identifier KID, mit dem der jeweils zu verwendende kryptographische Schlüssel angegeben ist über einen Object-Identifier, einen Algorithm-Identifier AID, mit dem der jeweils zu verwendende kryptographische Algorithmus zur Authentifikation angegeben ist, Algorithmus-Parameter AP, mit denen angegeben wird, welche Parameter im Rahmen der Authentifikation verwendet werden, ein Zeitstempel TS sowie eine Zufallszahl RN.

Ferner ist als Trailerinformation TI eine digitale Signatur DS vorgesehen. Als Algorithmus zur Authentifikation kann beispielsweise das asymmetrische RSA-Verfahren eingesetzt werden.

### Zugriffskontrolle für Managementinformation

Die SNMPv1-Zugriffskontrolle basiert auf zwei Mechanismen.

Erstens wird jedem Managed-Object in einer MIB ein Zugriffskontrollwert zugeordnet, der einen der drei folgenden Werte aufweist:
- Read-Only,
- Read-Write,
- Write-Only,
- Not-Accessable.

Zweitens wird jeder Community in dem SNMPv1-Agentenkonfiguration ein sog. MIB-View zusammen mit den jeweiligen Zugriffsrechten zugeordnet. Ein MIB-View enthält eine vorgebbare Anzahl von Object-Identifiern, die die jeweiligen Unterbäume oder sog. Blätter des SNMP-Registratur-Baums bezeichnet.

Die jeweiligen Zugriffsrechte weisen einen der folgenden Werte auf:
- Read Only,
- Write-Only,
- Read-Write,
- None.

### Sicherung der Datenintegrität eines SNMP-Requests

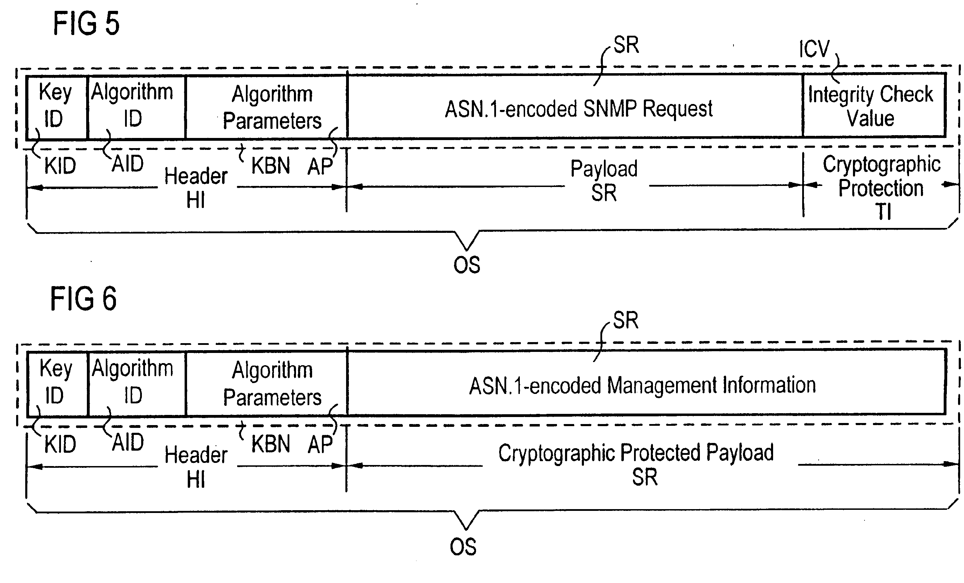

Zur Sicherung der Datenintegrität wird ein Mechanismus zur kryptographischen Sicherung der Datenintegrität eingesetzt. Hierfür werden Datenintegritätsprüfsummen über den gesamten SNMPv1-Request oder einen Teil davon gebildet. Dies kann beispielsweise mittels des DES im sog. Cipher-Block-Chaining-Mode (CBC-Modus) erfolgen. Für diesen speziellen Mechanismus ist die Verwendung eines 64 Bit langen Inititalisierungswerts erforderlich, der jeder Partei der jeweiligen Sicherheitsgruppe bekannt sein muß. Der Intitialisierungswert ist Teil der Algorithmusparameter AP, die in der Header-Information HI der kryptographisch bearbeiteten Nachricht KBN verwendet wird (vgl. Fig. 5). Ferner weist die Header-Information HI einen Schlüssel-Identifier KID sowie einen Algorithmus-Identifier AID auf, deren Funktionalität gleich ist wie bei der Authentifikation.

Ferner ist in einer Trailer-Information TI ein Integritätsprüfwert ICV vorgesehen.

### Verschlüsselung von SNMPv1-Requests

Vertraulichkeit der übertragenen SNMPv1-Daten kann auf ähnliche Weise erfolgen, wie die Sicherung der Datenintegrität. Zur Verschlüsselung kann beispielsweise wiederum das DES-Verfahren im CBC-Modus verwendet werden. In diesem Fall ist wiederum ein Initialisierungswert als Algorithmusparameter AP und einer Header-Information HI der kryptographisch bearbeiteten Nachricht KBN erforderlich (vgl. Fig. 6).

Wiederum ist in der Header-Information HI ein Schlüssel-Identifier KID sowie ein Algorithmus-Identifier AID mit oben beschriebener Funktionalität vorgesehen.

Weiterhin können Mechanismen zur Protokollierung der Kommunikation sowie zur Alarmgebung bei Auffinden von Angriffsversuchen vorgesehen sein.

Das Verfahren und das Computersystem können sehr vorteilhaft im Rahmen eines Szenarios verwendet werden, bei dem ein Anbieter eines Kommunikationsnetzes Bandbreite des Kommunikationsnetzes einem Dienstanbieter zur Verfügung stellt, der Dritten zusätzliche Dienste zur Verfügung stellt, die das Kommunikationsnetz als solche nicht vorsieht. In diesem Zusammenhang kann das Verfahren sowie das Computersystem vorteilhaft beispielsweise zur Kontrolle oder auch zur Abrechnung der von dem Anbieter des gesamten Kommunikationsnetzes zur Verfügung gestellten Resourcen dienen. In diesem Fall wird der Manager auf einem Computer des Anbieters des gesamten Kommunikationsnetzes realisiert sein und ein Agent jeweils bei dem Anbieter zusätzlicher Dienste.

In einer Variante des oben beschriebenen Ausführungsbeispiels ist es vorgesehen, die Antwortnachricht direkt, ohne Warten auf eine Abrufnachricht, zu codieren und an die erste Computereinheit zu senden. Somit sind folgende Schritte in der zweiten Computereinheit nicht erforderlich:
- die Codierung einer Abrufnachricht entsprechend dem Codierungsformat des Netzwerkprotokolls in der ersten Computereinheit, mit der die kryptographisch bearbeitete Antwortnachricht von der zweiten Computereinheit angefordert wird,
- die Übertragung der Abrufnachricht von der ersten Computereinheit zu der zweiten Computereinheit, sowie
- das Empfangen der Abrufnachricht.

Entsprechendes gilt für das Computersystem.

Anschaulich kann das Verfahren derart beschrieben werden, daß zu dem standardkonformen Netzwerkprotokoll z.B. dem SNMPv1-Protokoll auf den jeweiligen SNMP-Request oder auch CMIP-Request, ein kryptographisches Verfahren angewendet wird, mit dem eine kryptographische Sicherung des SNMP-Requests bzw. dem CMIP-Request erreicht wird. Um jedoch die Verwendung standardkonformer SNMP-Verfahren zu ermöglichen, wird die kryptographisch bearbeitete Nachricht wiederum mit dem jeweiligen Codierungsformat des Netzwerkprotokolls codiert. Dies entspricht einer "doppelten" Anwendung des jeweiligen Netzwerkprotokolls auf die zu codierende Nachricht.

## Patentansprüche

1. Verfahren zur Codierung einer digitalen Nachricht unter Verwendung eines Codierungsformats eines Netzwerkprotokolls und eines kryptographischen Verfahrens,
- bei dem die Nachricht unter Verwendung des Codierungsformats des Netzwerkprotokolls zu einer codierten Nachricht codiert wird,
- bei dem die codierte Nachricht mindestens einem kryptographischen Verfahren unterzogen wird, und
- bei dem die kryptographisch bearbeitete Nachricht unter Verwendung des Codierungsformats des Netzwerkprotokolls codiert wird.

2. Verfahren zur Decodierung einer digitalen Nachricht unter Verwendung eines Codierungsformats eines Netzwerkprotokolls und eines kryptographischen Verfahrens,
- bei dem die Nachricht entsprechend dem Codierungsformat des Netzwerkprotokolls decodiert wird,
- bei dem die decodierte kryptographisch bearbeitete Nachricht einem zu dem mindestens einen kryptographischen Verfahren inversen kryptographischen Verfahren unterzogen wird, und
- bei dem die invers kryptographisch bearbeitete Nachricht entsprechend dem Codierungsformat des Netzwerkprotokolls decodiert wird.

3. Verfahren nach einem der Ansprüche 1 oder 2,
bei dem als Netzwerkprotokoll das Simple Network Management Protocol Version 1 (SNMPv1) verwendet wird.

4. Verfahren zur Codierung einer digitalen Nachricht, zur Übertragung der Nachricht von einer ersten Computereinheit zu einer zweiten Computereinheit und zur Decodierung der Nachricht unter Verwendung eines Codierungsformats eines Netzwerkprotokolls und eines kryptographischen Verfahrens,
- bei dem in der ersten Computereinheit folgende Schritte durchgeführt werden:
-- die Nachricht wird unter Verwendung eines Codierungsformats eines Netzwerkprotokolls zu einer codierten Nachricht codiert,
-- die codierte Nachricht wird mindestens einem kryptographischen Verfahren wird,
-- die kryptographisch bearbeitete Nachricht wird unter Verwendung des Codierungsformats des Netzwerkprotokolls codiert,
- bei dem die codierte kryptographisch bearbeitete Nachricht von der ersten Computereinheit zu der zweiten Computereinheit übertragen wird,
- bei dem in der zweiten Computereinheit folgende Schritte durchgeführt werden:
-- die empfangene Nachricht wird entsprechend dem Codierungsformat des Netzwerkprotokolls decodiert,
- die decodierte kryptographisch bearbeitete Nachricht wird einem zu dem mindestens einen kryptographischen Verfahren inversen kryptographischen Verfahren unterzogen, und
- die invers kryptographisch bearbeitete Nachricht wird entsprechend dem Codierungsformat des Netzwerkprotokolls zu der digitalen Nachricht decodiert.

5. Verfahren nach Anspruch 4,
- bei dem die digitale Nachricht eine Anfrage zur Ausführung einer vorgebbaren Aktion enthält,
- bei dem in der zweiten Computereinheit die angeforderte Aktion ausgeführt wird, und
- bei dem in der zweiten Computereinheit das Ergebnis der Aktion in einer Antwortnachricht zu der ersten Computereinheit gesendet wird.

6. Verfahren nach Anspruch 4,
- bei dem die digitale Nachricht eine Anfrage zur Ausführung einer vorgebbaren Aktion enthält,
- bei dem in der zweiten Computereinheit die angeforderte Aktion ausgeführt wird,
- bei dem in der zweiten Computereinheit eine Antwortnachricht gebildet wird, die ein Ergebnis der Aktion enthält,
- bei dem in der zweiten Computereinheit die Antwortnachricht entsprechend dem Codierungsformat des Netzwerkprotokolls codiert wird,
- bei dem in der zweiten Computereinheit die Antwortnachricht mindestens einem kryptographischen Verfahren unterzogen wird,
- bei dem in der zweiten Computereinheit die kryptographisch bearbeitete Antwortnachricht gespeichert wird,
- bei dem in der ersten Computereinheit eine Abrufnachricht entsprechend dem Codierungsformat des Netzwerkprotokolls codiert wird, mit der die kryptographisch bearbeitete Antwortnachricht von der zweiten Computereinheit angefordert wird,
- bei dem die Abrufnachricht von der ersten Computereinheit zu der zweiten Computereinheit übertragen wird,
- bei dem die Abrufnachricht von der zweiten Computereinheit empfangen wird,
- bei dem die kryptographisch bearbeitete Antwortnachricht entsprechend dem Codierungsformat des Netzwerkprotokolls codiert wird, und
- bei dem die codierte kryptographisch bearbeitete Antwortnachricht von der zweiten Computereinheit zu der ersten Computereinheit übertragen wird.

7. Verfahren nach Anspruch 4,
- bei dem die digitale Nachricht eine Anfrage zur Ausführung einer vorgebbaren Aktion enthält,
- bei dem in der zweiten Computereinheit die angeforderte Aktion ausgeführt wird,
- bei dem in der zweiten Computereinheit eine Antwortnachricht gebildet wird, die ein Ergebnis der Aktion enthält,
- bei dem in der zweiten Computereinheit die Antwortnachricht entsprechend dem Codierungsformat des Netzwerkprotokolls codiert wird,
- bei dem in der zweiten Computereinheit die Antwortnachricht mindestens einem kryptographischen Verfahren unterzogen wird,
- bei dem die kryptographisch bearbeitete Antwortnachricht entsprechend dem Codierungsformat des Netzwerkprotokolls codiert wird, und
- bei dem die codierte kryptographisch bearbeitete Antwortnachricht von der zweiten Computereinheit zu der ersten Computereinheit übertragen wird.

8. Verfahren nach einem der Ansprüche 5 bis 7,
bei dem in der zweiten Computereinheit die kryptographisch bearbeitete Antwortnachricht in einer Management Information Base (MIB) gespeichert wird.

9. Verfahren nach einem der Ansprüche 4 oder 5,
bei dem als Netzwerkprotokoll das Simple Network Management Protocol Version 1 (SNMPv1) verwendet wird.

10. Verfahren nach Anspruch 9,
- bei dem in der ersten Computereinheit bei der Codierung der kryptographisch bearbeiteten Nachricht ein Set-Request gebildet wird, und
- bei dem der Set-Request von der ersten Computereinheit zu der zweiten Computereinheit übertragen wird.

11. Verfahren nach einem der Ansprüche 5 bis 8,
bei dem als Aktion eine Informationsabfrage und/oder eine Informationsangabe der zweiten Computereinheit übertragen wird.

12. Vorrichtung zur Codierung einer digitalen Nachricht unter Verwendung eines Codierungsformats eines Netzwerkprotokolls und eines kryptographischen Verfahrens, das mindestens folgende Komponenten umfaßt:
- ein erstes Mittel zur Codierung der digitalen Nachricht unter Verwendung des Codierungsformats des Netzwerkprotokolls zu einer codierten Nachricht,
- ein zweites Mittel zur kryptographischen Bearbeitung der codierten Nachricht,
- ein drittes Mittel zur Codierung der kryptographisch bearbeiteten Nachricht unter Verwendung des Codierungsformats des Netzwerkprotokolls.

13. Vorrichtung nach Anspruch 12,
bei dem als drittes Mittel das erste Mittel vorgesehen ist.

14. Vorrichtung zur Decodierung einer digitalen Nachricht unter Verwendung eines Codierungsformats eines Netzwerkprotokolls und eines kryptographischen Verfahrens, das mindestens folgende Komponenten umfaßt:
-- ein fünftes Mittel zum Empfangen der codierten kryptographisch bearbeiteten Nachricht von der ersten Computereinheit,
-- ein sechstes Mittel zur Decodierung der empfangenen Nachricht entsprechend dem Codierungsformat des Netzwerkprotokolls,
-- ein siebtes Mittel zur inversen kryptographischen Bearbeitung der decodierten kryptographisch bearbeiteten Nachricht, und
-- ein achtes Mittel zur Decodierung der invers kryptographisch bearbeiteten Nachricht entsprechend dem Codierungsformat des Netzwerkprotokolls.

15. Vorrichtung nach Anspruch 14,
bei dem als achtes Mittel das sechste Mittel vorgesehen ist.

16. Vorrichtung zur Codierung einer digitalen Nachricht, zur Übertragung der Nachricht von einer ersten Computereinheit zu einer zweiten Computereinheit und zur Decodierung der Nachricht unter Verwendung eines Codierungsformats eines Netzwerkprotokolls und eines kryptographischen Verfahrens
- bei dem eine erste Computereinheit vorgesehen ist, die mindestens folgende Komponenten umfaßt:
-- ein erstes Mittel zur Codierung der digitalen Nachricht unter Verwendung eines Codierungsformats eines Netzwerkprotokolls zu einer codierten Nachricht,
-- ein zweites Mittel zur kryptographischen Bearbeitung der codierten Nachricht,
-- ein drittes Mittel zur Codierung der kryptographisch bearbeiteten Nachricht unter Verwendung des Codierungsformats des Netzwerkprotokolls,
-- ein viertes Mittel zum Senden der codierten kryptographisch bearbeiteten Nachricht von der ersten Computereinheit zu der zweiten Computereinheit,
- bei dem eine zweite Computereinheit vorgesehen ist, die mindestens folgende Komponenten umfaßt:
-- ein fünftes Mittel zum Empfangen der codierten kryptographisch bearbeiteten Nachricht von der ersten Computereinheit,
-- ein sechstes Mittel zur Decodierung der empfangenen Nachricht entsprechend dem Codierungsformat des Netzwerkprotokolls,
-- ein siebtes Mittel zur inversen kryptographischen Bearbeitung der decodierten kryptographisch bearbeiteten Nachricht, und
-- ein achtes Mittel zur Decodierung der invers kryptographisch bearbeiteten Nachricht entsprechend dem Codierungsformat des Netzwerkprotokolls.

17. Vorrichtung nach Anspruch 16,
bei dem als drittes Mittel das erste Mittel vorgesehen ist.

18. Vorrichtung nach Anspruch 16,
bei dem als achtes Mittel das sechste Mittel vorgesehen ist.

19. Vorrichtung nach einem der Ansprüche 16 bis 18,
- bei dem die digitale Nachricht eine Anfrage zur Ausführung einer vorgebbaren Aktion enthält,
- bei dem in der zweiten Computereinheit ein neuntes Mittel zur Durchführung der angeforderten Aktion vorgesehen ist, und
- bei dem in der zweiten Computereinheit ein zehntes Mittel zum Senden des Ergebnisses der Aktion zu der ersten Computereinheit vorgesehen ist.

20. Vorrichtung nach einem der Ansprüche 16 bis 19,
- bei dem die digitale Nachricht eine Anfrage zur Ausführung einer vorgebbaren Aktion enthält,
- bei dem in der zweiten Computereinheit ein neuntes Mittel zur Durchführung der angeforderten Aktion vorgesehen ist,
- bei dem in der zweiten Computereinheit ein elftes Mittel zur Bildung einer Antwortnachricht, die ein Ergebnis der Aktion enthält, vorgesehen ist,
- bei dem in der zweiten Computereinheit ein zwölftes Mittel zur Codierung Antwortnachricht entsprechend dem Codierungsformat des Netzwerkprotokolls,
- bei dem in der zweiten Computereinheit ein dreizehntes Mittel zur Bearbeitung der Antwortnachricht mit mindestens einem kryptographischen Verfahren vorgesehen ist,
- bei dem in der zweiten Computereinheit ein vierzehntes Mittel zur Speicherung der kryptographisch bearbeiteten Antwortnachricht vorgesehen ist,
- bei dem in der ersten Computereinheit ein fünfzehntes Mittel zur Bildung und Codierung einer Abrufnachricht entsprechend dem Codierungsformat des Netzwerkprotokolls, mit der die kryptographisch bearbeitete Antwortnachricht von der zweiten Computereinheit angefordert wird, vorgesehen ist,
- bei dem in der ersten Computereinheit ein sechzehntes Mittel zum Senden der Abrufnachricht von der ersten Computereinheit zu der zweiten Computereinheit, vorgesehen ist,
- bei dem in der zweiten Computereinheit ein siebzehntes Mittel zum Empfangen der Abrufnachricht vorgesehen ist
- bei dem in der zweiten Computereinheit ein achtzehntes Mittel zur Codierung der in der Abrufnachricht angeforderten kryptographisch bearbeiteten Antwortnachricht entsprechend dem Codierungsformat des Netzwerkprotokolls, vorgesehen ist, und
- bei dem in der zweiten Computereinheit ein neunzehntes Mittel zum Senden der codierten kryptographisch bearbeiteten Antwortnachricht von der zweiten Computereinheit zu der ersten Computereinheit, vorgesehen ist.

21. Vorrichtung nach einem der Ansprüche 16 bis 19,
- bei dem die digitale Nachricht eine Anfrage zur Ausführung einer vorgebbaren Aktion enthält,
- bei dem in der zweiten Computereinheit ein neuntes Mittel zur Durchführung der angeforderten Aktion vorgesehen ist,
- bei dem in der zweiten Computereinheit ein elftes Mittel zur Bildung einer Antwortnachricht, die ein Ergebnis der Aktion enthält, vorgesehen ist,
- bei dem in der zweiten Computereinheit ein zwölftes Mittel zur Codierung Antwortnachricht entsprechend dem Codierungsformat des Netzwerkprotokolls,
- bei dem in der zweiten Computereinheit ein dreizehntes Mittel zur Bearbeitung der Antwortnachricht mit mindestens einem kryptographischen Verfahren vorgesehen ist,
- bei dem in der zweiten Computereinheit ein achtzehntes Mittel zur Codierung der kryptographisch bearbeiteten Antwortnachricht entsprechend dem Codierungsformat des Netzwerkprotokolls, vorgesehen ist, und
- bei dem in der zweiten Computereinheit ein neunzehntes Mittel zum Senden der codierten kryptographisch bearbeiteten Antwortnachricht von der zweiten Computereinheit zu der ersten Computereinheit, vorgesehen ist.

22. Vorrichtung nach Anspruch 20,
bei dem das vierzehnte Mittel derart ausgestaltet ist,daß die kryptographisch bearbeitete Antwortnachricht in einer Management Information Base (MIB) gespeichert wird.

23. Vorrichtung nach einem der Ansprüche 12 bis 22,
das derart ausgestaltet ist, daß als Netzwerkprotokoll das Simple Network Management Protocol Version 1 (SNMPv1) verwendet wird.

24. Vorrichtung nach Anspruch 12 oder 16,
- das derart ausgestaltet ist, daß als Netzwerkprotokoll das Simple Network Management Protocol Version 1 (SNMPv1) verwendet wird , und
- bei dem das dritte Mittel zur Codierung der kryptographisch bearbeiteten Nachricht derart ausgestaltet ist, daß bei der Codierung der kryptographisch bearbeiteten Nachricht ein Set-Request gebildet wird.

25. Vorrichtung nach einem der Ansprüche 19 bis 22,
bei dem als Aktion eine Informationsabfrage und/oder eine Informationsangabe der zweiten Computereinheit vorgesehen ist.

26. Vorrichtung nach einem der Ansprüche 16 bis 22,
bei dem das zweite Mittel, das dritte Mittel und das vierte Mittel zusammen als ein erster Proxy Agent ausgestaltet sind, und/oder
bei dem das fünfte Mittel, das sechste Mittel und das siebte Mittel zusammen als ein zweiter Proxy Agent ausgestaltet sind.

27. Vorrichtung nach Anspruch 20,
das derart ausgestaltet ist, daß als Netzwerkprotokoll das Simple Network Management Protocol Version 1 (SNMPv1) verwendet wird,- bei dem das fünfzehnte Mittel zur Bildung und Codierung der Abrufnachricht derart ausgestaltet ist, daß ein Get-Request gebildet wird,
- bei dem das achtzehnte Mittel zur Codierung der in der Abrufnachricht angeforderten kryptographisch bearbeiteten Antwortnachricht derart ausgestaltet ist, daß ein Get-Response gebildet wird.

28. Kommunikationssystem mit einem Manager eines Kommunikationsnetzes und einem Zwischenmanager eines Kommunikationsnetzes, der das Kommunikationsnetz verwendet und weitere Dienste, die über die von dem Kommunikationsnetz angebotenen Dienste hinausgehen, Kunden anbietet mit einer Vorrichtung nach einem der Ansprüche 13 bis 26.

## Claims

1. Method for encoding a digital message using a coding format of a network protocol and a cryptographic process,
- wherein the message is encoded to produce a coded message using the coding format of the network protocol,
- wherein the coded message undergoes at least one cryptographic process, and
- wherein the cryptographically processed message is encoded using the coding format of the network protocol.

2. Method for decoding a digital message using a coding format of a network protocol and a cryptographic process,
- wherein the message is decoded according to the coding format of the network protocol,
- wherein the decoded cryptographically processed message undergoes a cryptographic process which is the inverse of the at least one cryptographic process, and
- wherein the inversely cryptographically processed message is decoded according to the coding format of the network protocol.

3. Method according to one of claims 1 or 2,
wherein the Simple Network Management Protocol Version 1 (SNMPv1) is used as the network protocol.

4. Method for encoding a digital message, for transmitting the message from a first computer unit to a second computer unit and for decoding the message using a coding format of a network protocol and a cryptographic process,
- wherein the following steps are carried out in the first computer unit:
-- the message is encoded to produce a coded message using a coding format of a network protocol,
-- the coded message undergoes at least one cryptographic process,
-- the cryptographically processed message is encoded using the coding format of the network protocol,
- wherein the coded cryptographically processed message is transmitted from the first computer unit to the second computer unit,
- wherein the following steps are carried out in the second computer unit:
-- the received message is decoded according to the coding format of the network protocol,
- the decoded cryptographically processed message undergoes a cryptographic process which is the inverse of the at least one cryptographic process, and
- the inversely cryptographically processed message is decoded according to the coding format of the network protocol to produce the digital message.

5. Method according to claim 4,
- wherein the digital message contains a request to execute a predefinable action,
- wherein the requested action is executed in the second computer unit, and
- wherein, in the second computer unit, the result of the action is sent to the first computer unit in a response message.

6. Method according to claim 4,
- wherein the digital message contains a request to execute a predefinable action,
- wherein the requested action is executed in the second computer unit,
- wherein a response message containing a result of the action is created in the second computer unit,
- wherein the response message is encoded in the second computer unit according to the coding format of the network protocol,
- wherein the response message undergoes at least one cryptographic process in the second computer unit,
- wherein the cryptographically processed response message is stored in the second computer unit,
- wherein a call message with which the cryptographically processed response message is requested from the second computer unit is encoded in the first computer unit according to the coding format of the network protocol,
- wherein the call message is transmitted from the first computer unit to the second computer unit,
- wherein the call message is received by the second computer unit,
- wherein the cryptographically processed response message is encoded according to the coding format of the network protocol, and
- wherein the coded cryptographically processed response message is transmitted from the second computer unit to the first computer unit.

7. Method according to claim 4,
- wherein the digital message contains a request to execute a predefinable action,
- wherein the requested action is executed in the second computer unit,
- wherein a response message containing a result of the action is created in the second computer unit,
- wherein the response message is encoded in the second computer unit according to the coding format of the network protocol,
- wherein the response message undergoes at least one cryptographic process in the second computer unit,
- wherein the cryptographically processed response message is encoded according to the coding format of the network protocol, and
- wherein the coded cryptographically processed response message is transmitted from the second computer unit to the first computer unit.

8. Method according to one of claims 5 to 7,
wherein the cryptographically processed response message is stored in a Management Information Base (MIB) in the second computer unit.

9. Method according to one of claims 4 or 5,
wherein the Simple Network Management Protocol Version 1 (SNMPv1) is used as the network protocol.

10. Method according to claim 9,
- wherein a SET request is created with the encoding of the cryptographically processed message in the first computer unit, and
- wherein the SET request is transmitted from the first computer unit to the second computer unit.

11. Method according to one of claims 5 to 8,
wherein an information inquiry and/or a statement of information of the second computer unit is transmitted as the action.

12. Device for encoding a digital message using a coding format of a network protocol and a cryptographic process, comprising at least the following components:
- a first means for encoding the digital message using the coding format of the network protocol to produce a coded message,
- a second means for cryptographically processing the coded message,
- a third means for encoding the cryptographically processed message using the coding format of the network protocol.

13. Device according to claim 12,
wherein the first means is provided as the third means.

14. Device for decoding a digital message using a coding format of a network protocol and a cryptographic process comprising at least the following components:
-- a fifth means for receiving the encoded cryptographically processed message from the first computer unit,
-- a sixth means for decoding the received message according to the coding format of the network protocol,
-- a seventh means for inverse cryptographic processing of the decoded cryptographically processed message, and
-- an eighth means for decoding the inversely cryptographically processed message according to the coding format of the network protocol.

15. Device according to claim 14,
wherein the sixth means is provided as the eighth means.

16. Device for encoding a digital message, for transmitting the message from a first computer unit to a second computer unit and for decoding the message using a coding format of a network protocol and a cryptographic process
- wherein a first computer unit is provided which comprises at least the following components:
-- a first means for encoding the digital message using a coding format of a network protocol to produce a coded message,
-- a second means for cryptographic processing of the coded message,
-- a third means for encoding the cryptographically processed message using the coding format of the network protocol,
-- a fourth means for transmitting the coded cryptographically processed message from the first computer unit to the second computer unit,
- wherein a second computer unit is provided which comprises at least the following components:
-- a fifth means for receiving the encoded cryptographically processed message from the first computer unit,
-- a sixth means for decoding the received message according to the coding format of the network protocol,
-- a seventh means for inverse cryptographic processing of the decoded cryptographically processed message, and
-- an eighth means for decoding the inversely cryptographically processed message according to the coding format of the network protocol.

17. Device according to claim 16,
wherein the first means is provided as the third means.

18. Device according to claim 16,
wherein the sixth means is provided as the eighth means.

19. Device according to one of claims 16 to 18,
- wherein the digital message contains a request to carry out a predefinable action,
- wherein a ninth means for carrying out the requested action is provided in the second computer unit, and
- wherein a tenth means for transmitting the result of the action to the first computer unit is provided in the second computer unit.

20. Device according to one of claims 16 to 19,
- wherein the digital message contains a request to carry out a predefinable action,
- wherein a ninth means for carrying out the requested action is provided in the second computer unit,
- wherein an eleventh means for creating a response message containing a result of the action is provided in the second computer unit,
- wherein a twelfth means for encoding the response message according to the coding format of the network protocol is provided in the second computer unit,
- wherein a thirteenth means for processing the response message using at least one cryptographic process is provided in the second computer unit,
- wherein a fourteenth means for storing the cryptographically processed response message is provided in the second computer unit,
- wherein a fifteenth means for creating and encoding a call message according to the coding format of the network protocol, with which message the cryptographically processed response message is requested from the second computer unit, is provided in the first computer unit,
- wherein a sixteenth means for transmitting the call message from the first computer unit to the second computer unit is provided in the first computer unit,
- wherein a seventeenth means for receiving the call message is provided in the second computer unit
- wherein an eighteenth means for encoding the cryptographically processed response message requested in the call message according to the coding format of the network protocol is provided in the second computer unit, and
- wherein a nineteenth means for transmitting the coded cryptographically processed response message from the second computer unit to the first computer unit is provided in the second computer unit.

21. Device according to one of claims 16 to 19,
- wherein the digital message contains a request to execute a predefinable action,
- wherein a ninth means for executing the requested action is provided in the second computer unit,
- wherein an eleventh means for creating a response message containing a result of the action is provided in the second computer unit,
- wherein a twelfth means for encoding the response message according to the coding format of the network protocol [is provided] in the second computer unit,
- wherein a thirteenth means for processing the response message using at least one cryptographic process is provided in the second computer unit,
- wherein an eighteenth means for encoding the cryptographically processed response message according to the coding format of the network protocol is provided in the second computer unit, and
- wherein a nineteenth means for transmitting the cryptographically processed response message from the second computer unit to the first computer unit is provided in the second computer unit.

22. Device according to claim 20,
wherein the fourteenth means is designed such that the cryptographically processed response message is stored in a Management Information Base (MIB).

23. Device according to one of claims 12 to 22,
which is designed such that the Simple Network Management Protocol Version 1 (SNMPv1) is used as the network protocol.

24. Device according to claim 12 or 16,
- which is designed such that the Simple Network Management Protocol Version 1 (SNMPv1) is used as the network protocol, and
- wherein the third means for encoding the cryptographically processed message is designed such that a SET request is created with the encoding of the cryptographically processed message.

25. Device according to one of claims 19 to 22,
wherein an information inquiry and/or a statement of information of the second computer unit is provided as the action.

26. Device according to one of claims 16 to 22,
wherein the first means, the third means and the fourth means are together implemented as a first proxy agent, and/or
wherein the fifth means, the sixth means and the seventh means are together implemented as a second proxy agent.

27. Device according to claim 20,
which is designed such that the Simple Network Management Protocol Version 1 (SNMPv1) is used as the network protocol,
- wherein the fifteenth means for creating and encoding the call message is designed such that a GET request is created,
- wherein the eighteenth means for encoding the cryptographically processed response message requested in the call message is designed such that a GET response is created.

28. Communication system with a manager of a communication network and an intermediate manager of a communication network which uses the communication network and provides other services in addition to those provided by the communication network using a device as claimed in one of claims 13 to 26.

## Revendications

1. Procédé pour coder un message numérique en utilisant un format de codage d'un protocole de réseau et un procédé cryptographique, dans lequel
- le message est codé avec utilisation du format de codage du protocole de réseau pour obtenir un message codé,
- le message codé est soumis à au moins un procédé cryptographique et
- le message qui a subi un traitement cryptographique est codé avec utilisation du format de codage du protocole de réseau.

2. Procédé pour décoder un message numérique en utilisant un format de codage d'un protocole de réseau et un procédé cryptographique, dans lequel
- le message est décodé conformément au format de codage du protocole de réseau,
- le message décodé qui a subi un traitement cryptographique est soumis à un procédé cryptographique inverse de l'au moins un procédé cryptographique et
- le message ayant subi un traitement cryptographique inverse est décodé conformément au format de codage du protocole de réseau.

3. Procédé selon l'une des revendications 1 ou 2, dans lequel est utilisé, en tant que protocole de réseau, le « Simple Network Management Protocol Version 1 » (SNMPv1).

4. Procédé pour coder un message numérique, transmettre le message d'une première unité informatique à une deuxième unité informatique et décoder le message en utilisant un format de codage d'un protocole de réseau et un procédé cryptographique, dans lequel
- sont exécutées, dans la première unité informatique, les étapes suivantes :
■ le message est codé avec utilisation d'un format de codage d'un protocole de réseau pour obtenir un message codé,
■ le message codé est soumis à au moins un procédé cryptographique et
■ le message qui a subi un traitement cryptographique est codé avec utilisation du format de codage du protocole de réseau.
- le message codé qui a subi un traitement cryptographique est transmis de la première unité informatique à la deuxième unité informatique,
- sont exécutées, dans la deuxième unité informatique, les étapes suivantes :
■ le message reçu est décodé conformément au format de codage du protocole de réseau,
■ le message décodé qui a subi un traitement cryptographique est soumis à un procédé cryptographique inverse de l'au moins un procédé cryptographique et
■ le message qui a subi un traitement cryptographique inverse est décodé conformément au format de codage du protocole de réseau pour obtenir le message numérique.

5. Procédé selon la revendication 4, dans lequel
- le message numérique contient une requête d'exécution d'une action prédéterminable,
- l'action demandée est exécutée dans la deuxième unité informatique et
- dans la deuxième unité informatique, le résultat de l'action est envoyé à la première unité informatique dans un message de réponse.

6. Procédé selon la revendication 4, dans lequel
- le message numérique contient une requête d'exécution d'une action prédéterminable,
- l'action demandée est exécutée dans la deuxième unité informatique,
- un message de réponse qui contient un résultat de l'action est formé dans la deuxième unité informatique,
- le message de réponse, dans la deuxième unité informatique, est codé conformément au format de codage du protocole de réseau,
- le message de réponse, dans la deuxième unité informatique, est soumis à au moins un procédé cryptographique,
- le message de réponse qui a subi un traitement cryptographique est stocké dans la deuxième unité informatique,
- dans la première unité informatique est codé, conformément au format de codage du protocole de réseau, un message d'appel par lequel le message de réponse qui a subi un traitement cryptographique est demandé à la deuxième unité informatique,
- le message d'appel est transmis de la première unité informatique à la deuxième unité informatique,
- le message d'appel est reçu par la deuxième unité informatique,
- le message de réponse qui a subi un traitement cryptographique est codé conformément au format de codage du protocole de réseau et
- le message de réponse codé qui a subi un traitement cryptographique est transmis de la deuxième unité informatique à la première unité informatique.

7. Procédé selon la revendication 4, dans lequel
- le message numérique contient une requête d'exécution d'une action prédéterminable,
- l'action demandée est exécutée dans la deuxième unité informatique,
- un message de réponse qui contient un résultat de l'action est formé dans la deuxième unité informatique,
- le message de réponse, dans la deuxième unité informatique, est codé conformément au format de codage du protocole de réseau,
- le message de réponse, dans la deuxième unité informatique, est soumis à au moins un procédé cryptographique,
- le message de réponse qui a subi un traitement cryptographique est codé conformément au format de codage du protocole de réseau et
- le message de réponse codé qui a subi un traitement cryptographique est transmis de la deuxième unité informatique à la première unité informatique.

8. Procédé selon l'une des revendications 5 à 7, dans lequel le message de réponse qui a subi un traitement cryptographique est stocké dans une « Management Information Base » (MIB) dans la deuxième unité informatique.

9. Procédé selon l'une des revendications 4 ou 5, dans lequel est utilisé, en tant que protocole de réseau, le « Simple Network Management Protocol Version 1 » (SNMPv1).

10. Procédé selon la revendication 9, dans lequel
- une requête Set Request est formée dans la première unité informatique au codage du message qui a subi un traitement cryptographique et
- la requête Set Request est transmise de la première unité informatique à la deuxième unité informatique.

11. Procédé selon l'une des revendications 5 à 8, dans lequel est transmise, en tant qu'action, une interrogation d'information et/ou une mention d'information de la deuxième unité informatique.

12. Dispositif pour coder un message numérique en utilisant un format de codage d'un protocole de réseau et un procédé cryptographique, lequel comprend au moins les composants suivantes :
- un premier moyen pour coder le message numérique en utilisant le format de codage du protocole de réseau pour obtenir un message codé,
- un deuxième moyen pour le traitement cryptographique du message codé,
- un troisième moyen pour coder, en utilisant le format de codage du protocole de réseau, le message qui a subi un traitement cryptographique.

13. Dispositif selon la revendication 12, dans lequel le premier moyen est prévu en tant que troisième moyen.

14. Dispositif pour décoder un message numérique en utilisant un format de codage d'un protocole de réseau et un procédé cryptographique, lequel comprend au moins les composants suivantes :
- un cinquième moyen pour recevoir de la première unité informatique le message codé qui a subi un traitement cryptographique,
- un sixième moyen pour décoder le message reçu conformément au format de codage du protocole de réseau,
- un septième moyen pour le traitement cryptographique inverse du message décodé qui a subi un traitement cryptographique et
- un huitième moyen pour décoder le message qui a subi un traitement cryptographique inverse conformément au format de codage du protocole de réseau.

15. Dispositif selon la revendication 14, dans lequel le sixième moyen est prévu en tant que huitième moyen.

16. Dispositif pour coder un message numérique, transmettre le message d'une première unité informatique à une deuxième unité informatique et décoder le message en utilisant un format de codage d'un protocole de réseau et un procédé cryptographique, dans lequel
- est prévue une première unité informatique qui comprend au moins les composants suivantes :
■ un premier moyen pour coder le message numérique en utilisant un format de codage d'un protocole de réseau pour obtenir un message codé,
■ un deuxième moyen pour le traitement cryptographique du message codé,
■ un troisième moyen pour coder en utilisant le format de codage du protocole de réseau le message qui a subi un traitement cryptographique,
■ un quatrième moyen pour envoyer de la première unité informatique à la deuxième unité informatique le message codé qui a subi un traitement cryptographique,
- est prévue une deuxième unité informatique qui comprend au moins les composants suivantes :
■ un cinquième moyen pour recevoir de la première unité informatique le message codé qui a subi un traitement cryptographique,
■ un sixième moyen pour décoder le message reçu conformément au format de codage du protocole de réseau,
■ un septième moyen pour le traitement cryptographique inverse du message décodé qui a subi un traitement cryptographique et
■ un huitième moyen pour décoder conformément au format de codage du protocole de réseau le message qui a subi un traitement cryptographique inverse.

17. Dispositif selon la revendication 16, dans lequel le premier moyen est prévu en tant que troisième moyen.

18. Dispositif selon la revendication 16, dans lequel le sixième moyen est prévu en tant que huitième moyen.

19. Dispositif selon l'une des revendications 16 à 18, dans lequel
- le message numérique contient une requête d'exécution d'une action prédéterminable,
- un neuvième moyen pour exécuter l'action demandée est prévu dans la deuxième unité informatique,
- un dixième moyen pour envoyer le résultat de l'action à la première unité informatique est prévu dans la deuxième unité informatique.

20. Dispositif selon l'une des revendications 16 à 19, dans lequel
- le message numérique contient une requête d'exécution d'une action prédéterminable,
- un neuvième moyen pour exécuter l'action demandée est prévu dans la deuxième unité informatique,
- un onzième moyen pour former un message de réponse qui contient un résultat de l'action est prévu dans la deuxième unité informatique,
- un douzième moyen pour coder le message de réponse conformément au format de codage du protocole de réseau est prévu dans la deuxième unité informatique,
- un treizième moyen pour traiter le message de réponse avec au moins un procédé cryptographique est prévu dans la deuxième unité informatique,
- un quatorzième moyen pour stocker le message de réponse qui a subi un traitement cryptographique est prévu dans la deuxième unité informatique,
- un quinzième moyen pour former et coder un message d'appel conformément au format de codage du protocole de réseau, par lequel message le message de réponse qui a subi un traitement cryptographique est demandé à la deuxième unité informatique, est prévu dans la première unité informatique,
- un seizième moyen pour envoyer le message d'appel de la première unité informatique à la deuxième unité informatique est prévu dans la première unité informatique,
- un dix-septième moyen pour recevoir le message d'appel est prévu dans la deuxième unité informatique,
- un dix-huitième moyen pour coder conformément au format de codage du protocole de réseau le message de réponse demandé dans le message d'appel et qui a subi un traitement cryptographique est prévu dans la deuxième unité informatique et
- un dix-neuvième moyen pour envoyer le message de réponse codé qui a subi un traitement cryptographique de la deuxième unité informatique à la première unité informatique est prévu dans la deuxième unité informatique.

21. Dispositif selon l'une des revendications 16 à 19, dans lequel
- le message numérique contient une requête d'exécution d'une action prédéterminable,
- un neuvième moyen pour exécuter l'action demandée est prévu dans la deuxième unité informatique,
- un onzième moyen pour former un message de réponse qui contient un résultat de l'action est prévu dans la deuxième unité informatique,
- un douzième moyen pour coder le message de réponse conformément au format de codage du protocole de réseau est prévu dans la deuxième unité informatique,
- un treizième moyen pour traiter le message de réponse avec au moins un procédé cryptographique est prévu dans la deuxième unité informatique,
- un dix-huitième moyen pour coder conformément au format de codage du protocole de réseau le message de réponse qui a subi un traitement cryptographique est prévu dans la deuxième unité informatique et
- un dix-neuvième moyen pour envoyer le message de réponse codé qui a subi un traitement cryptographique de la deuxième unité informatique à la première unité informatique est prévu dans la deuxième unité informatique.

22. Dispositif selon la revendication 20, dans lequel le quatorzième moyen est réalisé de manière telle que le message de réponse qui a subi un traitement cryptographique est stocké dans une « Management Information Base » (MIB).

23. Dispositif selon l'une des revendications 12 à 22, lequel est réalisé de manière telle qu'est utilisé, en tant que protocole de réseau, le « Simple Network Management Protocol Version 1 » (SNMPv1).

24. Dispositif selon la revendication 12 ou 16,
- lequel est réalisé de manière telle qu'est utilisé, en tant que protocole de réseau, le « Simple Network Management Protocol Version 1 » (SNMPv1) et
- dans lequel le troisième moyen pour coder le message qui a subi un traitement cryptographique est réalisé de manière telle qu'une requête Set Request est formée au codage du message qui a subi un traitement cryptographique.

25. Dispositif selon l'une des revendications 19 à 22, dans lequel est prévue, en tant qu'action, une interrogation d'information et/ou une mention d'information de la deuxième unité informatique.

26. Dispositif selon l'une des revendications 16 à 22, dans lequel
- le deuxième moyen, le troisième moyen et le quatrième moyen sont réalisés conjointement sous la forme d'un premier agent proxy et/ou
- le cinquième moyen, le sixième moyen et le septième moyen sont réalisés conjointement sous la forme d'un deuxième agent proxy.

27. Dispositif selon la revendication 20,
lequel est réalisé de manière telle qu'est utilisé, en tant que protocole de réseau, le « Simple Network Management Protocol Version 1 » (SNMPv1), dans lequel
- le quinzième moyen pour former et coder le message d'appel est réalisé de manière telle qu'une requête Get Request se forme,
- le dix-huitième moyen pour coder le message de réponse demandé dans le message d'appel et qui a subi un traitement cryptographique est réalisé de manière telle qu'une réponse Get Response se forme.

28. Système de communication avec un gestionnaire d'un
réseau de communication et un gestionnaire intermédiaire d'un réseau de communication, lequel utilise le réseau de communication et offre à des clients d'autres services qui vont au-delà des services offerts par le réseau de communication, avec un dispositif selon l'une des revendications 13 à 26.
